# EUROPÄISCHE PATENTSCHRIFT

(11) **EP 3 766 685 B1**
(45) Veröffentlichungstag und Bekanntmachung des Hinweises auf die Patenterteilung: **18.06.2025**
(21) Anmeldenummer: 20186243.0
(22) Anmeldetag: 16.07.2020
(51) Int. Cl.: B32B 3/26, B32B 3/28, B32B 3/30, B32B 33/00

(54) **VERFAHREN UND VORRICHTUNG ZUR HERSTELLUNG EINES SUBSTRATVERBUNDES**
METHOD AND DEVICE FOR PRODUCING A SUBSTRATE COMPOUND
PROCÉDÉ ET DISPOSITIF DE FABRICATION D'UN SUBSTRAT COMPOSITE

(30) Priorität: 18.07.2019 DE 102019119571
(43) Veröffentlichungstag der Anmeldung: 20.01.2021
(73) Patentinhaber: Beier, Uwe, 01458 Ottendorf-Okrilla (DE)
(72) Erfinder: Beier, Uwe, 01458 Ottendorf-Okrilla (DE)
(74) Vertreter: Riechelmann & Carlsohn Patentanwälte PartG mbB

(56) Entgegenhaltungen:
- EP-A1- 2 990 201
- WO-A1-2018/114505
- WO-A2-2009/003464
- DE-A1- 10 214 010
- DE-A1- 3 840 704
- US-A1- 2002 098 124
- US-A1- 2011 309 716
- US-A1- 2013 210 186
- US-A1- 2015 173 964

## Beschreibung

Die Erfindung betrifft ein Verfahren zur Herstellung eines Substratverbundes. Sie betrifft ferner eine Vorrichtung, die für die Ausführung des erfindungsgemäßen Verfahrens geeignet ist.

Aus dem Stand der Technik sind flexible Basismaterialien, beispielsweise Folien, bekannt, die strukturierte Oberflächen aufweisen. Strukturierte Oberflächen sind für zahlreiche Anwendungen von Vorteil. Sie sind Voraussetzung, um Funktionen auf den Basismaterialien zu realisieren. Mittels solcher Funktionen können optische Effekte, Dekore, Sicherheitsfunktionen, fluidtechnische Funktionen, LAB-on-Chip-Funktionen, medizinische Funktionen, Sensorfunktionen und andere Funktionen auf dem Basismaterial erreicht werden.

Zur Herstellung einer strukturierten Oberfläche an einem Basismaterial werden nach dem Stand der Technik einseitig oder beidseitig auf dem Basissubstrat Strukturen ausgebildet. Dies kann durch Verformung der Oberfläche des Basismaterials unter mechanischem und/oder thermischem Einfluss geschehen, oder auch durch Aufbringung von flüssigen Stoffen wie z. B. unvernetzten Polymeren, welche mechanisch durch Werkzeuge strukturiert und anschließend ausgehärtet bzw. vernetzt werden.

Mit den aus dem Stand der Technik bekannten Methoden, können mehrlagige Strukturierungen nicht oder nur mit hohem Aufwand erreicht werden. Eine einlagige Strukturierung ist zwar für Dekorzwecke zumeist ausreichend. Funktionen, die mehrere strukturierte Schichten erfordern, lassen sich so jedoch nur schwer herstellen. Beispielsweise können jedoch Strukturen hergestellt werden, die fluidische Strukturen auf einem flexiblen Basismaterial ermöglichen. Es ist nach dem Stand der Technik zwar möglich, fluidische Strukturen auf einem Basismaterial in einzelnen Schritten nacheinander separat aufzubauen. Allerdings ist die Verfahrensweise nur in geringem Maße skalierbar, d. h. das Verfahren zur Herstellung eines Produktes, das eine fluidische Struktur aufweist, lässt kaum Veränderungen zu, so dass die Änderung des Produktes mit einem hohen Aufwand zur Anpassung der Fertigungsanlage, die zur Herstellung des Produktes benötigt wird, verbunden sind. Außerdem sind die finalen Produkte zumeist nicht mehr biegsam.

EP 2 990 201 A1 offenbart eine Vorrichtung und ein Verfahren zum Herstellen eines Substratverbundes, der zumindest ein erstes bandförmiges Substrat und ein zweites bandförmiges Substrat aufweist. WO 2018/114505 A1 offenbart ein Verfahren zur Herstellung einer Brennstoff- oder Elektrolytzelle, die jedoch keine Funktionsschicht aufweist. US 2002/0098124 A1 offenbart einen Mikrofluidik-Artikel, der jedoch keine Materialschicht aufweist, an der zuerst eine Makrostruktur ausgebildet wird, an der anschließend Mikro- und Nanostrukturen ausgebildet werden. US 2011/0309716 A1 offenbart ein Komposit, das aus mehreren Schichten besteht, und ein Verfahren zu dessen Herstellung. Ein Basissubstrat und ein Decksubstrat, zwischen denen eine strukturierte Funktionsschicht angeordnet ist, wird nicht beschrieben. US 2015/0173964 A1 offenbart ein Verfahren zur Herstellung von Absorberartikeln wie beispielsweise Windeln.

Aus dem Stand der Technik sind außerdem bislang keine Lösungen bekannt, welche die Vorteile von gedruckter Elektronik mit den Eigenschaften von strukturierten Oberflächen kombinieren.

Aufgabe der Erfindung ist es, die Nachteile nach dem Stand der Technik zu beseitigen. Es soll insbesondere ein Verfahren zur Herstellung eines biegsamen Substratverbundes, der mehrere strukturierte Funktionsschichten aufweist, angegeben werden, das skalierbar ist.

Diese Aufgabe wird durch die Merkmale der Ansprüche 1 und 13 gelöst. Zweckmäßige Ausgestaltungen der Erfindungen ergeben sich aus den Merkmalen der Unteransprüche.

Die Erfindung ist in den beigefügten Ansprüchen dargelegt. Nach Maßgabe der Erfindung ist ein Verfahren zur Herstellung eines mehrlagigen Substratverbundes mit den Merkmalen von Anspruch 1 vorgesehen. Der Substratverbund weist zumindest ein Basissubstrat, das zumindest eine Lage aufweist, ein Decksubstrat, das zumindest eine Lage aufweist, und eine Struktur-Funktionsschicht, die zwischen dem Basissubstrat und dem Decksubstrat liegt, auf. Zur Herstellung des mehrlagigen Substratverbundes wird zumindest eine der Lagen des Basissubstrates auf einer Rolle bereitgestellt; wird zumindest eine der Lagen des Decksubstrates auf einer Rolle bereitgestellt; wird zur Ausbildung einer Struktur-Funktionsschicht auf das Basissubstrat eine Materialschicht aufgebracht und wird die aufgebrachte Materialschicht einer Strukturierung unterzogen.

Das erfindungsgemäße Verfahren kann als Rolle-zu-Rolle-Verfahren ausgebildet sein. Unter dem Ausdnzck "Rolle-zu-Rolle-Verfahren" wird ein Verfahren verstanden, bei dem zumindest das Basissubstrat von einer Rolle abgewickelt wird. Es kann zusätzlich vorgesehen sein, dass der mittels des erfindungsgemäßen Verfahrens hergestellte Substratverbund auf eine Rolle aufgewickelt wird. Der Substratverbund ist vorzugsweise biegsam.

Das erfindungsgemäße Verfahren ist ein skalierbares Verfahren. Das erfindungsgemäße Verfahren kann ohne großen Aufwand verändert werden, so dass die Änderung eines Produktes, das aus dem Substratverbund hergestellt wird, leicht möglich ist. Eine Vorrichtung zur Herstellung des erfindungsgemäßen Substratverbundes kann leicht an eine Veränderung des erfindungsgemäßen Verfahrens angepasst werden. Das ist insbesondere darauf zurückzuführen, dass die Herstellung des Substratverbundes erfolgt, indem seine Bestandteile Stationen der Vorrichtung durchlaufen. Diese Stationen können mit geringem Aufwand verändert werden, und zwar sowohl im Hinblick auf die Reihenfolge der Stationen als auch der Verfahrensschritte die in den einzelnen Stationen ausgeführt werden.

Das Basissubstrat ist vorzugsweise ein flexibles und rollbares Substrat. Das Basissubstrat wird als Bandmaterial bereitgestellt. Das Basissubstrat kann eine Basislage und/oder eine Basis-Trägerlage aufweisen. Die Basislage kann auf einer Rolle bereitgestellt und von dieser Rolle abgewickelt werden. Die Basislage kann beispielsweise aus Kunststoff, Metall, Glas, Keramik, einer Textilie, einer Faserstruktur und einer Kombination von einem oder mehreren davon bestehen. Die Basislage kann selbst ein Laminat sein. Die Basislage kann somit ein vorgefertigter Substratverbund sein. Auch die Basis-Trägerlage kann auf einer Rolle bereitgestellt und von dieser Rolle abgewickelt werden.

Die Basis-Trägerlage kann nach der Herstellung des Substratverbundes oder dem Aufbringen eines Decksubstrates auf die äußere Struktur-Funktionsschicht entfernt werden. Er unterscheidet sich dadurch von der Basislage, die Bestandteil des Substratverbundes nach dessen Herstellung bleibt.

Es kann vorgesehen sein, dass auf der Basislage eine oder mehrere Basis-Funktionsschicht(en) ausgebildet sind. Eine Basis-Funktionsschicht ist eine Funktionsschicht, die im Gegensatz zu den Struktur-Funktionsschichten nicht als zu strukturierende Materialschicht in den Substratverbund eingebracht wird, sondern bereits Teil des Basissubstrates ist. Beispielsweise können sich die Basis-Funktionsschicht(en) bereits auf der Basislage - oder, wie nachstehend erläutert, auf der Basis-Trägerlage - befinden, die als Rolle bereitgestellt wird. Wird die Basislage als Laminat bereitgestellt, so können die Basis-Funktionsschicht(en) Teil des Laminates sein. Die Basis-Funktionsschicht(en) sind somit ein Teil des Basissubstrates. Bei einer Basis-Funktionsschicht kann es sich beispielsweise um eine Kontaktschicht, die elektrische und/oder optische Kontakte zwischen einer oder mehreren Funktionsschichten ermöglicht, handeln. Mittels der Kontaktschicht können Leiterbahnstrukturen ausgebildet sein. Derartige Kontaktschichten sind aus der flexiblen Elektronik bekannt.

Es kann vorgesehen sein, dass in der Basislage und/oder in der oder den Basis-Funktionsschicht(en) eine oder mehrere Öffnungen ausgebildet sind. Die Öffnungen können loch- oder kanalartig sein. Die Öffnungen können jedoch in einem späteren Verfahrensabschnitt in die Basislage und/oder die Basis-Funktionsschicht(en) eingebracht werden. Öffnungen können in der Basislage und/oder in der oder den Basis-Funktionsschicht(en) beispielsweise mittels eines Lasers ausgebildet sein oder werden. Die Öffnungen können einen Zugang für Medien, beispielsweise Fluide, schaffen, so dass diese zu der oder den Struktur-Funktionsschicht(en) geführt werden können. In der oder den Basis-Funktionsschicht(en) können eine oder mehrere durchgehende Öffnungen ausgebildet sein, die fluchtend zu durchgehenden Öffnungen angeordnet sind, die in der Basislage ausgebildet sind. Damit ist ein Durchgang durch die Basislage und die Basis-Funktionsschicht(en) möglich. In der Basislage können jedoch auch eine oder mehrere durchgehende Öffnungen ausgebildet sein, die von einer Basis-Funktionsschicht, die an der Basislage anliegt, verschlossen sind. Diese Öffnungen können zur Kontaktierung dieser Basis-Funktionsschicht durch die Basislage hindurch genutzt werden. In einer Basis-Funktionsschicht können eine oder mehrere Öffnungen ausgebildet sein, die fluchtend zu Öffnungen in einer benachbarten Basis-Funktionsschicht liegen.

In einer Ausführungsform ist nur eine Basis-Funktionsschicht vorgesehen. Diese Basis-Funktionsschicht ist vorzugsweise eine Kontaktschicht.

An der zweiten Flächenseite der Basislage kann eine Basis-Trägerlage ausgebildet sein. Die Basis-Funktionsschicht(en) sind vorzugsweise an der ersten Flächenseite der Basislage angeordnet. Das kann bedeuten, dass eine Basis-Funktionsschicht an der ersten Flächenseite der Basislage anliegt und, falls vorhanden, eine oder mehrere weitere Basis-Funktionsschichten unter Ausbildung eines Stapels auf der Basis-Funktionsschicht angeordnet sind, die an der ersten Flächenseite der Basislage anliegt. Die Basis-Trägerlage bedeckt die zweite Flächenseite der Basislage, und zwar vorzugsweise vollständig. Die Basis-Trägerlage dient zum Schutz der Oberfläche der Basislage und/oder zur Unterstützung des Transportes der Basislage in einer Vorrichtung zur Herstellung des erfindungsgemäßen Substratverbundes. Das ist insbesondere dann zweckmäßig, wenn die Basislage aus einem fragilen oder dehnungsempfindlichen Material besteht. Die Basis-Trägerlage kann eine Folie sein, beispielsweise eine Folie aus Kunststoff, Metall oder einer Textilie. Die Basis-Trägerlage weist vorzugsweise keine Öffnungen auf.

Es ist nicht zwingend erforderlich, dass das Basissubstrat eine Basislage aufweist. Vielmehr können auf der Basis-Trägerlage die eine oder mehreren Basis-Funktionsschichten ausgebildet sein.

Bei einem Basissubstrat kann es sich somit handeln um (i) eine Basislage, auf der weder eine Basis-Funktionsschicht noch eine Basis-Trägerlage angeordnet sind; (ii) eine Basislage, auf der eine oder mehrere Basis-Funktionsschichten, aber keine Basis-Trägerlage angeordnet sind; (iii) eine Basislage, auf der keine Basis-Funktionsschicht, aber eine Basis-Trägerlage angeordnet ist; (iv) eine Basislage, auf der eine oder mehrere Basis-Funktionsschichten und eine Basis-Trägerlage angeordnet sind; oder (v) eine Basis-Trägerlage, auf der eine oder mehrere Basis-Funktionsschichten angeordnet sind, ohne dass eine Basislage vorhanden ist.

Die Basislage und die Basis-Trägerlage sind jeweils eine Lage des Basissubstrates.

Das erfindungsgemäße Verfahren sieht das Ausbilden einer oder mehrerer Struktur-Funktionsschichten auf dem Basissubstrat vor. Die Struktur-Funktionsschicht(en) werden nicht durch Umformen der Basislage oder des Basissubstrates aus der Basislage oder dem Basissubstrat herausgeführt, sondern als zusätzliche Schicht(en) aufgebracht. Die aufgebrachten Struktur-Funktionsschicht(en) weisen eine Strukturierung auf.

Unter dem Begriff "Struktur-Funktionsschicht" wird in der vorliegenden Erfindung eine Funktionsschicht verstanden, die eine oder zwei strukturierte Flächenseiten aufweist. Eine strukturierte Flächenseite ist eine Flächenseite, die Erhebungen und/oder Vertiefungen aufweist. Eine Struktur-Funktionsschicht kann eine Nenndicke aufweisen. Die Nenndicke kann der Dicke der aufgetragenen Materialschicht entsprechen, aus der die Struktur-Funktionsschicht durch Strukturierung ausgebildet wird. Eine Erhebung ist dabei ein Strukturelement, dessen Dicke größer als die Nenndicke ist. Eine Vertiefung ist dabei ein Strukturelement, dessen Dicke geringer als Nenndicke ist. Sind in einer Flächenseite einer Struktur-Funktionsschicht mehrere Strukturelemente ausgebildet, also (i) mehrere Erhöhungen, (ii) mehrere Vertiefungen oder (iii) zumindest eine Erhöhung und zumindest eine Vertiefung so weist diese Flächenseite eine Profilierung auf. Eine Erhöhung kann als erhabenes, d. h. positives Strukturelement, eine Vertiefung als versenktes, d. h. negatives Strukturelement angesehen werden. Die Strukturelemente können eine beliebige Anordnung und/oder Größe haben. Sie können ineinander übergehen. Die Erhebungen und Vertiefungen können eine Makrostruktur bilden.

Es kann vorgesehen sein, dass die negativen Strukturelemente eine Restdicke von Null aufweisen. Beispielsweise kann die Struktur-Funktionsschicht, die an das Basissubstrat angrenzt, eine oder mehrere negative Strukturelemente aufweisen, die eine Restdicke von Null besitzen. Das heißt mit anderen Worten, dass sich ein negatives Strukturelement bis zum Basissubstrat, beispielsweise der Basislage oder der äußersten Basis-Funktionsschicht, erstreckt. Eine solches negatives Strukturelement kann als Verbindung zu einer Öffnung, die in dem Basissubstrat ausgebildet ist, beispielsweise einer Öffnung (i) in der oder den Basis-Funktionsschicht(en) oder (ii) einer Öffnung in der oder den Basis-Funktionsschicht(en) und einer fluchtend dazu ausgebildeten Öffnung in der Basislage genutzt werden. Auf diese Weise wird ein Kanal erreicht, der sich durch die Struktur-Funktionsschicht bis zu der oder den Basis-Funktionsschicht(en) oder bis zu der Flächenseite der Basislage erstreckt, die der oder den Struktur-Funktionsschichten abgewandt ist. Weist das Basissubstrat keine Basis-Trägerlage auf, so erstreckt sich der Kanal dann bis zur Umgebung des Substratverbundes. Sind mehrere Struktur-Funktionsschichten vorgesehen, so können negative Strukturen in zwei oder mehr Struktur-Funktionsschichten fluchtend zueinander ausgebildet sein, so dass ein Kanal zwischen zwei oder mehr der Struktur-Funktionsschichten gebildet wird.

Es ist nicht erforderlich, dass eine Struktur-Funktionsschicht die gesamte Flächenseite des Basissubstrates abdeckt. Es kann vielmehr ausreichend sein, wenn eine Struktur-Funktionsschicht nur einen oder mehrere Abschnitte des Basissubstrates abdeckt. Das hat zur Folge, dass andere Abschnitte des Basissubstrates, beispielsweise die Basislage oder, wenn die Basislage eine Basis-Funktionsschicht aufweist, Teile der äußeren Basis-Funktionsschicht, freiliegen. Diese anderen Abschnitte sind dann zugänglich. Weist das Basissubstrat beispielsweise eine Kontaktschicht auf und bedeckt die Struktur-Funktionsschicht nur einen oder mehrere Abschnitte der Kontaktschicht, so liegen in den anderen Abschnitten der Kontaktschicht deren Strukturen frei. Die freiliegenden Strukturen können genutzt werden, um eine spätere Kontaktierung zu ermöglichen. Alternativ können Öffnungen oder Ausbrüche in der Basislage und/oder zumindest in der an die Basis-Funktionsschicht(en) angrenzenden Struktur-Funktionsschicht ausgebildet sein, um eine Zugänglichkeit der Basis-Funktionsschicht(en) durch die Basislage bzw. durch die Struktur-Funktionsschicht zu erreichen. Zu der Öffnung oder dem Ausbruch in der an die Basis-Funktionsschicht(en) angrenzenden Struktur-Funktionsschicht können in weiteren Struktur-Funktionsschicht(en) fluchtende Öffnungen vorgesehen sein.

Unter dem Begriff "Strukturierung" wird in der vorliegenden Erfindung eine Bearbeitung einer Materialschicht zur Ausbildung von Erhebungen und/oder Vertiefungen verstanden. Dabei kann vorgesehen sein, dass jede Struktur-Funktionsschicht unmittelbar nach ihrem Aufbringen einer Strukturierung unterzogen wird. Es kann vorgesehen sein, dass die Strukturierung einer Materialschicht mittels eines Werkzeuges, beispielsweise mittels eines Stempels oder einer Walze, vorgenommen werden. Anschließend kann die Materialschicht unter Erhalt der der Struktur-Funktionsschicht gehärtet und/oder vernetzt werden.

Bei den mittels der Strukturierung ausgebildeten Strukturelementen kann es sich um Makrostrukturen, Mikrostrukturen und/oder Nanostrukturen handeln. Unter einer Makrostruktur kann ein Strukturelement verstanden werden, das eine Ausdehnung von 1000 µm oder mehr aufweist; unter einer Mikrostruktur kann ein Strukturelement verstanden werden, das eine Ausdehnung aufweist, die 1 µm oder größer, aber kleiner als 1000 µm ist; und unter einer Nanostruktur kann ein Strukturelement verstanden werden, dass eine Ausdehnung kleiner 1 µm, beispielsweise kleiner als 100 nm aufweist. Die Ausbildung von Mikro- und/oder Nanostrukturen ist vorteilhaft, um dem Substratverbund bestimmte Funktionen zu verleihen. Zu diesen Funktionen gehören beispielsweise Lichtbrechungen oder fluidische Funktionen wie hydrophobe oder hydrophile Oberflächeneigenschaften. Lichtbrechungen sind insbesondere für optische Anwendungen und Anwendungen im Sicherheitsbereich von Interesse.

Unter Verwendung des Werkzeuges werden bei der Strukturierung Makrostrukturen ausgebildet. Gleichzeitig zur Ausbildung der Makrostrukturen oder im Anschluss daran werden Mikro- und/oder Nanostrukturen ausgebildet. Dazu kann dasselbe Werkzeug verwendet werden, sofern das Werkzeug eine zur Ausbildung von Mikro- und/oder Nanostrukturen geeignete Werkzeuggestaltung aufweist. Unter der Angabe "gleichzeitig" wird die Ausbildung der Makrostrukturen und der Mikro- und/oder Nanostrukturen in einem Arbeitsgang verstanden. Ist jedoch die Ausbildung von Mikro- und/oder Nanostrukturen im Anschluss an die Ausbildung der Makrostrukturen vorgesehen, so kann ein zweiter Arbeitsgang vorgesehen sein. Bei dem zweiten Arbeitsvorgang kann ein zweites Werkzeug zur Ausbildung der Mikro- und/oder Nanostrukturen eingesetzt werden. Ein zweiter Arbeitsgang ist insbesondere dann vorteilhaft, wenn unterschiedliche Bereiche auf zuvor erzeugten Makrostrukturen geschaffen werden sollen. Auf die Makrostrukturen kann beispielsweise ein Materialfilm aufgebracht werden, der dann mittels des Werkzeuges strukturiert und dann fixiert und/oder ausgehärtet wird. Der Materialfilm ist vorzugsweise sehr dünn, d. h. seine Dicke ist 0,1 mm oder keiner (auch als Zehntel-Millimeter-Bereich bezeichnet); 0,01 mm oder kleiner (Hundertstel-Millimeter-Bereich); 0,001 nun oder kleiner (Tausendstel-Millimeter-Bereich oder Mikrometer-Bereich); oder 0,0001 mm oder kleiner (Nanometer-Bereich).

Das erfindungsgemäße Verfahren ermöglicht somit die Ausbildung von mikro- und/oder nanostrukturierten Bereichen auf einer Makrostruktur. Mittels dieser Bereiche können beispielsweise unterschiedliche Leitfähigkeiten von Fluiden auf der Struktur-Funktionsschicht eingestellt werden. Das ist insbesondere für die Ausbildung von Sensorik sinnvoll.

Die Materialschicht, die zur Ausbildung einer Struktur-Funktionsschicht auf das Basissubstrat oder eine andere Struktur-Funktionsschicht aufgebracht wird, besteht vorzugsweise aus einem monomeren- und/oder polymeren Material, das durch eine geeignete Behandlung, beispielsweise eine chemische, optische und/oder thermische Behandlung fixiert und/oder ausgehärtet werden kann. Die mittels des Werkzeuges der Materialschicht eingeprägte Struktur bleibt dann dauerhaft erhalten. Bei dem monomeren oder polymeren Material handelt es sich vorzugsweise um ein Material, das durch Vernetzen ausgehärtet werden kann. Dazu kann die Materialschicht einen Vernetzer enthalten.

Der Materialfilm, der aus Ausbildung von Mikro- und/oder Nanostrukturen auf einer Makrostruktur vorgesehen sein kann, besteht vorzugsweise aus einem monomeren- und/oder polymeren Material, das durch eine geeignete Behandlung, beispielsweise eine chemische, optische und/oder thermische Behandlung fixiert und/oder ausgehärtet werden kann. Die mittels eines Werkzeuges, beispielsweise des zweiten Werkzeuges, dem Materialfilm eingeprägte Mikro- und/oder Nanostruktur bleibt dann dauerhaft erhalten. Bei dem monomeren oder polymeren Material handelt es sich vorzugsweise um ein Material, das durch Vernetzen ausgehärtet werden kann. Dazu kann der Materialfilm einen Vernetzer enthalten. Der Materialfilm kann aus demselben Material bestehen wie die Materialschicht.

Die Struktur-Funktionsschichten werden vorzugsweise auf der Seite des Basissubstrates ausgebildet, die der Basis-Trägerlage abgewandt ist. Werden mehrere Struktur-Funktionsschichten auf ein Basissubstrat aufgebracht, so liegt eine erste Struktur-Funktionsschicht entweder an der Flächenseite des Basissubstrates an, die der Basis-Trägerlage abgewandt ist, oder an der dem Basissubstrat abgewandten Flächenseite der äußeren Basis-Funktionsschicht des Basissubstrates. Die äußere Basis-Funktionsschicht ist diejenige Basis-Funktionsschicht, die eine Außenseite des Basissubstrates bildet. Weitere Struktur-Funktionsschichten können anschließend auf die jeweils zuvor ausgebildete Struktur-Funktionsschicht unter Ausbildung eines Stapels aus Struktur-Funktionsschichten aufgebracht werden.

Die Struktur-Funktionsschicht(en) sollten zumindest temporär auf dem Basissubstrat anhaften. Eine dauerhafte Anhaftung der Struktur-Funktionsschicht(en) auf dem Basissubstrat kann vorgesehen sein, ist aber nicht zwingend erforderlich. Beispielsweise kann vorgesehen sein, das Basissubstrat nach dem Ausbilden der Struktur-Funktionsschicht(en) zu entfernen, so dass eine dauerhafte Anhaftung unerwünscht und eine temporäre Haftung erwünscht ist. Unter einer temporären Haftung kann dabei eine Haftung für einen Zeitraum vom Aufbringen der einzigen oder ersten Struktur-Funktionsschicht auf das Basissubstrat bis zum verfahrensgemäß vorgesehenen Entfernen des Basissubstrates von der einzigen oder ersten Struktur-Funktionsschicht verstanden werden.

Um eine hinreichende Haftung der einzigen oder ersten Struktur-Funktionsschicht auf dem Basissubstrat zu gewährleisten, können beispielsweise die chemischen Zusammensetzungen (i) des Basissubstrates oder seiner äußeren Basis-Funktionsschicht und (ii) der einzigen oder ersten Struktur-Funktionsschicht aufeinander abgestimmt werden. Das ist insbesondere dann zweckmäßig, wenn das Basissubstrat oder seine äußere Basis-Funktionsschicht einerseits und die einzige oder erste Struktur-Funktionsschicht andererseits aus unterschiedlichen Ausgangsmaterialien bestehen. Zur Gewährleistung einer temporären oder dauerhaften Haftung der einzigen oder ersten Struktur-Funktionsschicht auf dem Basissubstrat können alternativ ein oder mehrere Klebstofffilme vorgesehen sein. Alternativ können das oder die Struktur-Funktionsschicht(en) über eine Klebeeigenschaft verfügen. Eine solche Klebeeigenschaft kann sich aus dem Material, aus dem die Materialschicht gebildet ist, ergeben. Es kann vorgesehen sein, dass die Klebeeigenschaft einer Aktivierung unterliegt. Eine solche Aktivierung kann beispielsweise durch Bestrahlung oder thermisch vorgenommen werden.

Der Substratverbund kann ein Decksubstrat aufweisen. Das Decksubtrat wird auf die äußere Struktur-Funktionsschicht aufgebracht. Die äußere Struktur-Funktionsschicht ist diejenige Struktur-Funktionsschicht, die am weitesten von dem Basissubstrat entfernt ist. Ist nur eine Struktur-Funktionsschicht vorhanden, so wird das Decksubstrat auf die Flächenseite der Struktur-Funktionsschicht aufgebracht, die dem Basissubstrat abgewandt ist. Sind mehrere Struktur-Funktionsschichten vorgesehen, wird das Decksubstrat auf die Flächenseite der äußeren Struktur-Funktionsschicht aufgebracht, die der darunterliegenden Struktur-Funktionsschicht abgewandt ist.

Das Decksubstrat ist vorzugsweise ein flexibles und rollbares Substrat. Das Decksubstrat wird als Bandmaterial bereitgestellt. Das Decksubstrat kann eine Decklage aufweisen. Die Decklage kann auf einer Rolle bereitgestellt und von dieser Rolle abgewickelt werden. Die Decklage kann beispielsweise aus Kunststoff, Metall, Glas, Keramik, einer Textilie, einer Faserstruktur und einer Kombination von einem oder mehreren davon bestehen. Die Decklage kann selbst ein Laminat sein. Die Decklage kann somit ein vorgefertigter Substratverbund sein.

Es kann vorgesehen sein, dass auf der Decklage eine oder mehrere Funktions-Deckschichten ausgebildet sind. Eine Funktions-Deckschicht ist eine Funktionsschicht, die im Gegensatz zu den Struktur-Funktionsschicht(en) nicht als zu strukturierende Materialschicht in den Substratverbund eingebracht wird, sondern bereits Teil des Decksubstrates ist. Beispielsweise können sich die Deck-Funktionsschicht(en) bereits auf der Decklage, die als Rolle bereitgestellt wird, befinden. Wird die Decklage als Laminat bereitgestellt, so können die Deck-Funktionsschicht(en) Teil des Laminates sein. Die Deck-Funktionsschicht(en) sind somit Teil des Decksubstrates. Bei einer Deck-Funktionsschicht kann es sich beispielsweise um eine Kontaktschicht, die elektrische und/oder optische Kontakte zwischen einer oder mehreren Funktionsschichten ermöglicht, handeln. Mittels der Kontaktschicht können Leiterbahnstrukturen ausgebildet sein. Derartige Kontaktschichten sind aus der flexiblen Elektronik bekannt.

Es kann vorgesehen sein, dass in der Decklage und/oder in einer oder mehreren Deck-Funktionsschicht(en) eine oder mehrere Öffnungen ausgebildet sind. Die Öffnungen können loch- oder kanalartig sein. Die Öffnungen können jedoch in einem späteren Verfahrensabschnitt in die Decklage und/oder in die Deck-Funktionsschicht(en) eingebracht werden. Öffnungen können in der Decklage und/oder der oder den Deck-Funktionsschicht(en) beispielsweise mittels eines Lasers ausgebildet sein oder werden. Die Öffnungen können einen Zugang für Medien, beispielsweise Fluide, schaffen, so dass diese zu der oder den Struktur-Funktionsschicht(en) geführt werden können. In der oder den Deck-Funktionsschicht(en) können eine oder mehrere durchgehende Öffnungen ausgebildet sein, die fluchtend zu durchgehenden Öffnungen angeordnet sind, die in der Decklage ausgebildet sind. Damit ist ein Durchgang durch die Decklage und die Deck-Funktionsschicht(en) möglich. In der Decklage können jedoch auch eine oder mehrere durchgehende Öffnungen ausgebildet sein, die von der Deck-Funktionsschicht, die an der Decklage anliegt, verschlossen sind. Diese Öffnungen können zur Kontaktierung dieser Deck-Funktionsschicht durch die Decklage hindurch genutzt werden. In einer Deck-Funktionsschicht können eine oder mehrere Öffnungen ausgebildet sein, die fluchtend zu Öffnungen in einer benachbarten Deck-Funktionsschicht liegen.

In einer Ausführungsform ist nur eine Deck-Funktionsschicht vorgesehen. Diese Deck-Funktionsschicht ist vorzugsweise eine Kontaktschicht. In einer Ausführungsform sind nur eine Basis-Funktionsschicht, vorzugsweise eine Kontaktschicht, und nur eine Deck-Funktionsschicht, vorzugsweise eine Kontaktschicht, vorgesehen.

An der zweiten Flächenseite der Decklage kann eine Deck-Trägerlage ausgebildet sein. Die Deck-Funktionsschicht(en) sind vorzugsweise an der ersten Flächenseite der Decklage angeordnet. Das kann bedeuten, dass eine Deck-Funktionsschicht an der ersten Flächenseite der Decklage anliegt und, falls vorhanden, eine oder mehrere weitere Deck-Funktionsschicht(en) unter Ausbildung eines Stapels auf der Deck-Funktionsschicht angeordnet sind, die an der ersten Flächenseite der Basislage anliegt. Die Deck-Trägerlage bedeckt die zweite Flächenseite der Decklage, und zwar vorzugsweise vollständig. Die Deck-Trägerlage dient zum Schutz der Oberfläche der Decklage und/oder zur Unterstützung des Transportes der Decklage in einer Vorrichtung zur Herstellung des erfindungsgemäßen Substratverbundes. Das ist insbesondere dann zweckmäßig, wenn die Decklage aus einem fragilen oder dehnungsempfindlichen Material besteht. Die Deck-Trägerlage kann eine Folie sein, beispielsweise eine Folie aus Kunststoff, Metall oder einer Textilie. Die Deck-Trägerlage weist vorzugsweise keine Öffnungen auf.

Bei einem Decksubstrat kann es sich somit handeln um (i) eine Decklage, auf der weder eine Deck-Funktionsschicht noch eine Deck-Trägerlage angeordnet sind; (ii) eine Decklage, auf der eine oder mehrere Deck-Funktionsschichten, aber keine Deck-Trägerlage angeordnet sind; (iii) eine Decklage, auf der keine Deck-Funktionsschicht, aber eine Deck-Trägerlage angeordnet ist; oder (iv) eine Decklage, auf der eine oder mehrere Deck-Funktionsschichten und eine Deck-Trägerlage angeordnet sind.

Weist das Decksubstrat eine oder mehrere Deck-Funktionsschicht(en) auf, so wird das Decksubstrat vorzugsweise derart auf die äußerste Struktur-Funktionsschicht aufgebracht, dass die erste Flächenseite des Decksubstrates - das ist die Flächenseite, an der sich die Deck-Funktionsschicht(en) befinden - der Struktur-Funktionsschicht zugewandt ist. Weist das Decksubstrat eine Deck-Trägerschicht auf, so wird das Decksubstrat vorzugsweise derart auf die äußerste Struktur-Funktionsschicht aufgebracht, dass die Deck-Trägerschicht der Struktur-Funktionsschicht abgewandt ist.

Das Decksubstrat wird vorzugsweise auf die äußerste Struktur-Funktionsschicht derart aufgebracht, dass ihre Deck-Funktionsschicht(en) der äußeren Struktur-Funktionsschicht zugewandt ist. Das Decksubrat kann dabei die äußere Flächenseite der äußeren Struktur-Funktionsschicht vollständig bedecken. Alternativ kann das Decksubstrat jedoch derart aufgebracht sein, dass es nur an ersten Bereichen der äußeren Flächenseite der äußeren Struktur-Funktionsschicht anliegt, während es an zweiten Bereichen der äußeren Flächenseite nicht anliegt. Auf diese Weise können ein oder mehrere Zwischenräume ausgebildet sein, die von der äußeren Flächenseite der äußeren Struktur-Funktionsschicht und dem Decksubstrat begrenzt werden. Bei den ersten Bereichen kann es sich um positive Strukturelemente handeln, bei den zweiten Bereichen um negative Strukturelemente.

Die Decklage und die Deck-Trägerlage sind jeweils eine Lage des Decksubstrates.

Die Verbindung zwischen der äußeren Struktur-Funktionsschicht und dem Decksubstrat kann über verschiedene Technologien, beispielsweise thermisch und/oder chemisch, hergestellt werden. Bevorzugt ist eine Verbindung durch eine Klebeverbindung vorgesehen. Eine Klebeverbindung kann beispielsweise durch Aktivierung der Klebeeigenschaft der äußeren Struktur-Funktionsschicht oder durch einen Klebstofffilm realisiert werden. Dazu kann auf die Flächenseite des Decksubstrates, die der äußeren Struktur-Funktionsschicht zugewandt sein soll, und/oder auf die äußere Flächenseite der Struktur-Funktionsschicht ein Klebstofffilm aufgebracht werden. Die äußere Flächenseite der Struktur-Funktionsschicht ist die Flächenseite der äußeren Struktur-Funktionsschicht, die dem Decksubstrat zugewandt ist. Der Klebstofffilm sollte möglichst dünn sein.

Alternativ oder zusätzlich zu der Aktivierung der Klebeeigenschaft oder zur Aufbringung eines Klebstofffilms kann auch der im Zusammenhang mit den Struktur-Funktionsschichten beschriebene Materialfilm genutzt werden, um eine Klebeverbindung zwischen der äußeren Struktur-Funktionsschicht und dem Decksubstrat herzustellen. Dazu wird das Decksubstrat mit der äußeren Flächenseite der äußeren Struktur-Funktionsschicht in Bereichen in Kontakt gebracht, in denen zuvor der Materialfilm aufgebracht wurde, und zwar bevor dieser fixiert und/oder ausgehärtet wird. Nach dem Aufbringen des Decksubstrates auf den Materialfilm wird dieser dann fixiert oder ausgehärtet, wodurch eine feste Verbindung zwischen der äußeren Struktur-Funktionsschicht und dem Decksubstrat hergestellt wird.

Das Decksubstrat überdeckt vorzugsweise die gesamte äußere Flächenseite der äußeren Struktur-Funktionsschicht, wobei zur Ausbildung von Zwischenräumen es nicht erforderlich ist, dass sie vollständig an ihr anliegt. In dem Decksubstrat, vorzugsweise in der Decklage, können Öffnungen oder Ausbrüche ausgebildet sein, um eine Zugänglichkeit der Deck-Funktionsschicht(en) durch die Decklage zu erreichen.

Mit Aufbringen des Decksubstrates wird ein Substratverbund erhalten, bei dem die Struktur-Funktionsschicht(en) zwischen dem Basissubstrat und dem Decksubstrat angeordnet sind. Die Struktur-Funktionsschicht(en) sind zwischen dem Basissubstrat und dem Decksubstrat eingeschlossen. Sie sind auf diese Weise geschützt, gekapselt, abgeschlossen und getrennt von der Umgebung. Die Öffnungen in der oder den Struktur-Funktionsschicht(en) können Kanäle bilden, welche für Fluide gezielt genutzt werden können. Die Kanäle können Kanalstrukturen bilden.

Materialien und/oder Aufbau des Decksubstrates können den Materialien bzw. dem Aufbau des Basissubstrates gleichen.

Der Substratverbund kann eine oder mehrere Kontaktschichten aufweisen. Beispielsweise kann die Basis-Funktionsschicht eine Kontaktschicht sein. Ebenso kann die Deck-Funktionsschicht eine Kontaktschicht sein. Der Substratverbund kann zumindest eine weitere Kontaktschicht aufweisen. Beispielsweise kann er eine Kontaktschicht aufweisen, die zwischen zwei benachbarten Struktur-Funktionsschichten ausgebildet ist. An der Zwischenlage kann eine Kontaktschicht ausgebildet sein, die die Elektronikkomponente(n) und/Elektronikstrukturen kontaktiert, die sich in Zwischenräumen der Zwischenlage befinden. Eine Kontaktschicht ist eine Schicht, die elektrische und/oder optische Kontakte zwischen einer oder mehreren Funktionsschichten ermöglicht. Mittels der Kontaktschicht können Leiterbahnstrukturen ausgebildet sein. Derartige Kontaktschichten sind aus der flexiblen Elektronik bekannt.

Es kann vorgesehen sein, dass in den Substratverbund eine oder mehrere Elektronickomponenten integriert sind. Beispielsweise können eine oder mehrere Elektronikkomponenten in eine oder mehrere der folgenden Lagen integriert oder auf diese Lage(n) aufgebracht sein: die Basis-Funktionsschicht, die Struktur-Funktionsschicht, die Deck-Funktionsschicht, die Basislage und die Decklage. In einer bevorzugten Ausführungsform sind eine oder mehrere Elektronikkomponenten in die Basislage und/oder die Decklage und/oder eine zwischen zwei Struktur-Funktionsschichten liegende Kontaktschicht integriert. Im Folgenden bezeichnet der Ausdruck "Funktionsschicht" eine der folgenden Schichten: Basis-Funktionsschicht, Struktur-Funktionsschicht und Deck-Funktionsschicht. Eine Kontaktschicht, die zwischen zwei Struktur-Funktionsschichten angeordnet ist, ist vorzugsweise selbst keine Struktur-Funktionsschicht, auch wenn das möglich ist.

Zumindest eine der Elektronikkomponenten, vorzugsweise zwei oder mehrere der Elektronikkomponenten und bevorzugt alle Elektronikkomponenten können aktive Elektronikkomponenten sein. Der Begriff "Elektronikkomponenten" umfasst auch elektronische Schaltungen. Beispiele von Elektronikkomponenten sind integrierte Schaltkreise (engl. Integrated Circuit); Prozessoren wie beispielsweise Central Processing Units (CPU); Logikbausteine; elektronische Speicher wie beispielsweise Random-Access Memory (RAM); Leuchtdioden (LED); organische Leuchtdioden (OLED); Antennen; Heizungen; und Sensorik; wobei die Aufzählung nicht abschließend ist. Mittels der Elektronickomponente(n) wird in dem mehrlagigen Substratverbund eine Elektronikstruktur geschaffen. Das heißt mit anderen Worten, dass der mehrlagige Substratverbund eine Elektronikstruktur aufweist. Die Elektronikstruktur kann aus der oder den Elektronikkomponente(n) bestehen oder diese aufweisen. Die Elektronikstruktur kann zumindest eine aktive Elektronikkomponente aufweisen, so kann sie als aktive Elektronikstruktur angesehen werden. Die Elektronikstruktur kann ferner Verbindungselemente zum Verbinden von Elektronikkomponenten untereinander oder zum Kontaktieren einer oder mehrerer der Elektronikkomponenten von außerhalb des mehrlagigen Substratverbundes aufweisen. Bei den Verbindungselementen kann es sich beispielsweise um Leiter zum Leiten von elektronischem Strom oder Lichtleitkabel handeln. Es kann vorgesehen sein, dass die Kontaktierung der Elektronikkomponente(n) und/oder Elektronikstruktur(en) über einen leitfähigen Kleber hergestellt wird. Der leitfähige Kleber kann strukturiert auf eine Lage, vorzugsweise auf eine Funktionsschicht und/oder auf Kontaktstellen der Elektronikkomponente(n) und/oder Elektronikstruktur(en) aufgebracht werden. Beispielsweise kann zur elektrischen Verbindung der Elektronikkomponente(n) und/oder Elektronikstruktur(en) mit einer Funktionsschicht, auf die die Elektronikkomponente(n) und/oder Elektronikstruktur(en) aufgebracht werden, vorgesehen sein, dass ein leitfähiger Kleber strukturiert auf die Funktionsschicht und/oder auf Kontaktstellen der Elektronikkomponente(n) und/oder Elektronikstruktur(en) aufgebracht wird. Das Aufbringen des leitfähigen Klebers auf eine Lage, beispielsweise eine Funktionsschicht wird vorzugsweise vorgenommen, bevor die Elektronikkomponente(n) und/oder Elektronikstruktur(en) auf die Lage aufgebracht werden. Zusätzlich kann vorgesehen sein, dass leitfähiger Kleber auf die Kontaktstellen der Elektronikkomponente(n) und/oder Elektronikstruktur(en) aufgebracht wird, bevor diese auf die Lage aufgebracht werden.

Die Elektronikstruktur kann beispielsweise zur Analyse von Vorgängen, beispielsweise von chemischen Vorgängen, verwendet werden. Bei der Analyse kann es sich um eine eigenständige Analyse handeln. Unter dem Begriff "eigenständige Analyse" wird dabei eine automatische Analyse verstanden. Eine solche Analyse kann eine vollständige Analyse einer Substanz, insbesondere einer Flüssigkeit, umfassen. Mittels der Elektronikkomponente(n) kann beispielsweise ein Lab-on-a-Chip in dem erfindungsgemäßen mehrlagigen Substratverbund ausgebildet sein. Das erfindungsgemäße Verfahren ermöglicht somit die Integration der Lab-on-a-Chip-Technologie in einem mehrlagigen Substratverbund.

Bei der oder den Elektronikkomponente(n) kann es sich um siliciumbasierte Elektronikkomponenten handeln. Siliciumbasierte Elektronikkomponenten sind für solche gekapselte Anwendungen in abgedünnter Form verfügbar. Eine Elektronikkomponente hat in einem Beispiel eine abgedünnte Form, wenn ihre Dicke 0,3 mm oder weniger, bevorzugt 0,2 mm oder weniger beträgt. Beispielsweise sind Wafer verfügbar, die von 0,6 mm auf 0,3 mm oder 0,2 mm abgedünnt sind. Diese Wafer können als Grundwafer eingesetzt werden. Elektronikkomponenten in abgedünnter Form lassen sich vorteilhaft in dünne Lagenstrukturen integrieren. Die Elektronikkomponente(n), beispielsweise Mikrocomputer und/oder Mikrokontroller, können vollkommen autark funktionsfähige Einheiten sein. Sie können als vollkommen autark funktionsfähige Einheiten vorgefertigt sein. Anschließend können sie in die Lage(n) eingebettet werden. Die Elektronikkomponenten können somit kleine, vollkommen autark funktionsfähige Einheiten in dem Substratverbund bilden. Auf diese Weise können mittels des Substratverbundes beispielsweise Mikrochips, elektronische Baugruppen, elektronische Einzelteile oder elektronische Geräte gebildet werden.

Es ist nicht zwingend erforderlich, dass die Elektronikkomponente(n) bereits in eine Lage eingebettet sind, wenn diese Lage als Rolle bereitgestellt wird. Es ist stattdessen möglich, eine, mehrere oder alle Elektronikkomponenten oder eine, mehrere oder alle Elektronikstrukturen, die aus einer oder mehreren Elektronikkomponenten gebildet sind, nach dem Abwickeln der Lage, in die die Elektronkomponente(n) und/oder die Elektronikstruktur(en) eingebettet werden sollen, die Elektronickomponente(n) und/oder die Elektronikstruktur(en) in die Lage einzubetten. Das Einbetten der Elektronikkomponente(n) und/oder Elektronikstruktur(en) kann mittels eines Pick-and-Place-Verfahrens erfolgen. Dabei können die Elektronikkomponente(n) und/oder Elektronikstruktur(en) der abgewickelten Lage zugeführt, auf der Lage platziert, dort befestigt und falls vorgesehen, kontaktiert werden. Zum Einbetten von auf einer Lage platzierten, befestigten und gegebenenfalls. kontaktierten Elektronikkomponente(n) und/oder Elektronikstruktur(en) kann dann eine weitere Lage auf diese Lage derart aufgebracht werden, dass die Elektronikkomponente(n) und/oder Elektronikstruktur(en) zwischen diesen Lagen angeordnet sind. Bei der weiteren Lage kann es sich beispielsweise um die Deck-Trägerlage handeln. Das Einbetten der Elektronikkomponente(n) und/oder Elektronikstruktur(en) zwischen den zwei Lagen schließt die Elektronikkomponente(n) und/oder Elektronikstruktur(en) ein. Dieser Vorgang kann auch als Verkapseln bezeichnet werden. Einige oder alle der derart eingekapselten Elektronickomponente(n) und/oder Elektronikstruktur(en) sind in gewissen Grenzen biegsam. Das gilt insbesondere für abgedünnte Elektronikkomponente(n).

Bei der Einbettung von Elektronikkomponente(n) und/oder Elektronikstruktur(en) zwischen zwei planen Lagen können Zwischenräume entstehen. Diese Zwischenräume können mit einem Ausgleichsmaterial gefüllt werden. Bei dem Ausgleichsmaterial kann es sich beispielsweise um ein polymeres Material handeln. Das polymere Material kann im flüssigen Zustand in die Zwischenräume eingebracht und dort anschließend ausgehärtet und/oder fixiert werden. In einer zweiten Ausführungsform kann die Verwendung einer Zwischenlage vorgesehen sein. Die Zwischenlage füllt die Zwischenräume aus. Sie weist Ausnehmungen für die Elektronikkomponente(n) und/oder Elektronikstruktur(en) auf. Bei der Zwischenlage kann es sich um ein planes, flexibles Substrat handeln. Die Zwischenlage kann auf einer Rolle bereitgestellt und von dieser Rolle abgewickelt werden. Die Zwischenlage kann auf eine Lage aufgebracht werden, bevor oder nachdem die Elektronikkomponente(n) und/oder Elektronikstruktur(en) auf diese Lage aufgebracht werden. Anschließend kann die weitere Lage, beispielsweise die Basis-Trägerlage oder die Deck-Trägerlage, auf die Zwischenlage aufgebracht werden, wodurch die Elektronikkomponente(n) und/oder Elektronikstruktur(en) eingebettet werden. Die Verwendung einer Zwischenlage hat den Vorteil, dass eine einheitliche und vorgegebene Höhenausdehnung zwischen den beiden Lagen, zwischen denen die Elektronikkomponente(n) und/oder Elektronikstruktur(en) angeordnet sind, erreicht wird. Es kann vorgesehen sein, dass eventuelle Spalte, die bei Verwendung einer Zwischenlage zwischen dieser und den Elektronikkomponente(n) und/oder Elektronikstruktur(en) entstehen, mittels eines Dichtmaterials, beispielsweise einem polymeren Material, abgedichtet oder verriegelt werden. Dazu kann das polymere Material in flüssiger Form unter Ausbildung von Polymerschichten, vorzugsweise dünnen Polymerschichten, auf die Zwischenlage aufgebracht werden und, vorzugsweise nach dem Aufbringen der weiteren Lage, beispielsweise der Basis-Trägerlage oder der Deck-Trägerlage, ausgehärtet und/oder fixiert werden. In einer dritten Variante wird in den Zwischenräumen ein Vakuum ausgebildet, wobei ebenfalls eine Abdichtung oder Verriegelung, wie vorstehend beschrieben, vorgesehen sein kann. In einer vierten Variante werden die Zwischenräume mit einem Medium, beispielsweise einem Gas oder einer Flüssigkeit, gefüllt, wobei ebenfalls eine Abdichtung oder Verriegelung, wie vorstehend beschrieben, vorgesehen sein kann. Es können auch Kombinationen aus mehreren oder allen dieser Varianten vorgesehen sein. Das Medium kann unter Überdruck stehen. Das ist insbesondere dann möglich, wenn das Medium ein Gas ist.

Die Zwischenlage ist vorzugsweise ein flexibles und rollbares Substrat. Die Zwischenlage kann als Bandmaterial bereitgestellt werden. Die Zwischenlage kann auf einer Rolle bereitgestellt und von dieser Rolle abgewickelt werden. Die Zwischenlage kann beispielsweise aus Kunststoff, Metall, Glas, Keramik, einer Textilie, einer Faserstruktur und einer Kombination von einem oder mehreren davon bestehen. Die Zwischenlage kann selbst ein Laminat sein.

Die Verwendung einer Zwischenlage ist vorteilhaft, weil sie die Ausbildung von Zwischenräumen um die eingebetteten Baugruppen ermöglicht. Die Zwischenräume ermöglichen, insbesondere wenn sie mit Medien, Vakuum oder unter Überdruck stehenden Gasen gefüllt sind, die Herstellung eines Substratverbundes, der für spezielle Anwendungen geeignet ist: Beispielsweise ist der Aufbau einer Gesamtstruktur möglich, die zum Einsatz an der Atmosphäre bestimmt ist, aber Zwischenräume aufweist, die mit Vakuum gefüllt sind. Auch für die Realisierung einer Drucksensorik kann ein solcher Aufbau eines Substratverbundes von Vorteil sein.

Es kann vorgesehen sein, dass in einer oder mehreren Lagen, Öffnungen und Durchkontaktierungen ausgebildet sind, die bis zu den und/oder durch die Elektronikkomponente(n) und/oder Elektronikstruktur(en) geführt sind.

In einer bevorzugten Ausführungsform sind die Elektronikkomponente(n) und/oder Elektronikstruktur(en) in die Decklage eingebettet. Dabei kann die Decklage zwischen einer Deck-Funktionsschicht und einer Deck-Trägerschicht angeordnet sein. In der Decklage und/oder der Deck-Funktionsschicht können Öffnungen und Durchkontaktierungen ausgebildet sein, die bis zu den und/oder durch die Elektronikkomponente(n) und/oder Elektronikstruktur(en) geführt sind.

Nach Maßgabe der Erfindung ist ferner eine Vorrichtung zur Herstellung eines mehrlagigen Substratverbundes mit den Merkmalen von Anspruch 13 vorgesehen. Der Substratverbund weist zumindest ein Basissubstrat, das zumindest eine Lage aufweist, ein Decksubstrat, das zumindest eine Lage aufweist, und eine Struktur-Funktionsschicht, die zwischen dem Basissubstrat und dem Decksubstrat liegt, auf. Die Vorrichtung besitzt:
- zumindest eine Rolle zur Bereitstellung einer Lage des Basissubstrates;
- zumindest eine Rolle zur Bereitstellung einer der Lagen des Decksubstrates; und
- eine Einrichtung zur Ausbildung einer Struktur-Funktionsschicht auf dem Basissubstrat, wobei die Einrichtung zumindest eine Auftragungseinrichtung zum Auftragen einer Materialschicht auf das Basissubstrat oder auf eine Struktur-Funktionsschicht und zumindest ein Werkzeug zum Strukturieren der aufgebrachten Materialschicht aufweist.

Die erfindungsgemäße Vorrichtung ist insbesondere zur Ausführung des erfindungsgemäßen Verfahrens geeignet. Es kann vorgesehen sein, dass das Werkzeug eine Werkzeugwalze zum Aufprägen einer Struktur der Materialschicht ist. Es kann ferner vorgesehen sein, dass die erfindungsgemäße Vorrichtung eine Strahlungsquelle zum Fixieren und/oder Aushärten der Materialschicht mittels einer optischen Strahlung aufweist. Dabei kann die Strahlungsquelle innerhalb oder außerhalb der Werkzeugwalze angeordnet sein.

Weitere Einzelheiten der erfindungsgemäßen Vorrichtung sind vorstehend im Zusammenhang mit dem erfindungsgemäßen Verfahren beschrieben worden. Auf diese Einzelheiten wird zur Vermeidung von Wiederholungen verwiesen.

Die erfindungsgemäße Vorrichtung kann für die Herstellung und/oder Bereitstellung des Basissubstrates Folgendes aufweisen: eine erste Rolle zur Bereitstellung der Basis-Trägerlage und einen Abwickler zum Abwickeln der Basis-Trägerlage von der ersten Rolle; optional, wenn der herzustellende Substratverbund eine Basislage aufweisen soll, eine zweite Rolle zur Bereitstellung der Basislage und einen Abwickler zum Abwickeln der Basislage von der zweiten Rolle; optional, wenn eine Basislage vorgesehen ist, eine erste Walze zum Zusammenführen der Basis-Trägerlage mit der Basislage, und zwar vorzugsweise so, dass die Basis-Trägerlage an der zweiten Flächenseite der Basislage anliegt und/oder dass nur die Basis-Trägerlage an der ersten Walze anliegt, während die Basislage nicht an der ersten Walze anliegt; optional, wenn die Basislage nicht bereits eine Basis-Funktionsschicht trägt oder wenn eine weitere Basis-Funktionsschicht auf eine bereits vorhandene Basis-Funktionsschicht aufgetragen werden soll, eine erste Kontaktschicht-Auftragungseinrichtung; und optional, wenn eine Basis-Funktionsschicht strukturiert werden soll, eine erste Kontaktschicht-Strukturierungsvorrichtung.

Die erfindungsgemäße Vorrichtung kann zum Aufbringen einer Struktur-Funktionsschicht eine erste Prozess-Station aufweisen. Die erste Prozess-Station kann Folgens aufweisen: eine erste Auftragungseinrichtung zum Auftragen einer Materialschicht auf das Basissubstrat; eine erste Werkzeugwalze zum Aufprägen einer Makrostruktur und, falls vorgesehen, einer Mikro- und/oder Nanostruktur auf die Flächenseite der Materialschicht, die der ersten Werkzeugwalze zugewandt ist; zumindest eine Strahlungsquelle zum Aushärten und/oder Fixieren der strukturierten Materialschicht mittels optischer Strahlung; und, optional, wenn die ausgehärtete und strukturierte Materialschicht einer weiteren Strukturierung unterzogen werden soll, eine Strukturierungseinrichtung zur weiteren Strukturierung der ausgehärteten und strukturierten Materialschicht.

Die erfindungsgemäße Vorrichtung kann für die Herstellung des Decksubstrates Folgendes aufweisen: eine dritte Rolle zur Bereitstellung der Deck-Trägerlage und einen Abwickler zum Abwickeln der Deck-Trägerlage von der dritten Rolle; eine vierte Rolle zum Bereitstellen der Decklage und einen Abwickler zum Abwickeln der Decklage von der vierten Rolle; eine zweite Walze zum Zusammenführen der Deck-Trägerlage mit der Decklage, und zwar vorzugsweise so, dass die Deck-Trägerlage an der zweiten Flächenseite der Decklage anliegt und/oder dass nur die Deck-Trägerlage an der zweiten Walze anliegt, während die Decklage nicht an der zweiten Walze anliegt; optional, wenn die Decklage nicht bereits eine Deck-Funktionsschicht trägt oder wenn eine weitere Deck-Funktionsschicht auf eine bereits vorhandene Deck-Funktionsschicht aufgetragen werden soll, eine zweite Kontaktschicht-Auftragungseinrichtung; und optional, wenn eine Deck-Funktionsschicht strukturiert werden soll, eine zweite Kontaktschicht-Strukturierungsvorrichtung.

Die erfindungsgemäße Vorrichtung kann ein erstes Walzenpaar zum Zusammenlegen des Decksubstrates mit einem Substratverbund, der das Basissubstrat und die Struktur-Funktionsschicht aufweist oder daraus besteht, aufweisen. Die Walzen des ersten Walzenpaares können unter Ausbildung eines Spaltes voneinander beabstandet sein. In dem Spalt können der in der ersten Prozess-Station erhaltene Substratverbund und das Decksubstrat zusammengeführt werden. Vorzugsweise liegt dabei der Substratverbund mit seiner Basis-Trägerlage an einer Walze des ersten Walzenpaares an, während die Deck-Trägerlage der anderen Walze des ersten Walzenpaares zugewandt ist. Das erste Walzenpaar kann zur Herstellung eines Substratverbundes dienen, der aus einem Basissubstrat, einer Struktur-Funktionsschicht und einem Decksubstrat besteht. Die erfindungsgemäße Vorrichtung kann ein Paar von Kalibrierungswalzen zur Einstellung der Dicke dieses Substratverbundes aufweisen. Die erfindungsgemäße Vorrichtung kann eine Decksubstrat-Strukturierungsvorrichtung zur Strukturierung der Deck-Trägerlage aufweisen. Die Decksubstrat-Strukturierungsvorrichtung ist vorzugsweise nach dem ersten Walzenpaar angeordnet. Sie kann nach dem Paar von Kalibrierungswalzen angeordnet sein.

Die erfindungsgemäße Vorrichtung kann zur Entfernung des Basissubstrates von einem zuvor hergestellten Substratverbund Folgendes aufweisen: optional eine dritte Walze und/oder eine vierte Walze zum Führen des Substratverbundes zu einem zweiten Walzenpaar; das zweite Walzenpaar zum Abtrennen des Basissubstrates von dem Substratverbund; einen Aufwickler zum Aufwickeln des Basissubstrates auf eine fünfte Rolle; und die fünfte Rolle.

Die erfindungsgemäße Vorrichtung kann eine dritte Kontaktschicht-Auftragungseinrichtung zum Auftragen einer weiteren Funktionsschicht auf die nach Abtrennung des Basissubstrates freiliegende Flächenseite einer Struktur-Funktionsschicht aufweisen. Die erfindungsgemäße Vorrichtung kann, falls eine Strukturierung der aufgetragenen Kontaktschicht erfolgen soll, eine dritte Kontaktschicht-Strukturierungsvorrichtung zur Strukturierung der aufgetragenen Kontaktschicht aufweisen.

Die erfindungsgemäße Vorrichtung kann zur Auftragung einer weiteren, zweiten Struktur-Funktionsschicht eine zweite Prozess-Station aufweisen. Die zweite Prozess-Station kann Folgens aufweisen: eine zweite Auftragungseinrichtung zum Auftragen einer Materialschicht, und zwar vorzugsweise auf die freiliegende Flächenseite der ersten Struktur-Funktionsschicht oder, wenn diese eine Kontaktschicht trägt, auf die Kontaktschicht; eine zweite Werkzeugwalze zum Aufprägen einer Makrostruktur und, falls vorgesehen, einer Mikro- und/oder Nanostruktur auf die Flächenseite der Materialschicht, die der zweiten Werkzeugwalze zugewandt ist; zumindest eine Strahlungsquelle zum Aushärten und/oder Fixieren der strukturierten Materialschicht mittels optischer Strahlung; und, optional, wenn die ausgehärtete und strukturierte Materialschicht einer weiteren Strukturierung unterzogen werden soll, eine Strukturierungseinrichtung zur weiteren Strukturierung der ausgehärteten und strukturierten Materialschicht.

Die erfindungsgemäße Vorrichtung kann für die Herstellung und/oder Bereitstellung eines zweiten Basissubstrates Folgendes aufweisen: eine sechste Rolle zur Bereitstellung einer Basis-Trägerlage und einen Abwickler zum Abwickeln der zweiten Basis-Trägerlage von der sechsten Rolle; optional, wenn das herzustellende zweite Basissubstrat eine Basislage aufweisen soll, eine zweite Rolle zur Bereitstellung einer Basislage und einen Abwickler zum Abwickeln der Basislage von der siebten Rolle; optional, wenn eine Basislage vorgesehen ist, eine fünfte Walze zum Zusammenführen der Basis-Trägerlage mit der Basislage, und zwar vorzugsweise so, dass die Basis-Trägerlage an der zweiten Flächenseite der Basislage anliegt und/oder dass nur die Basis-Trägerlage an der fünften Walze anliegt, während die Basislage nicht an der fünften Walze anliegt; optional, wenn die Basislage nicht bereits eine Basis-Funktionsschicht trägt oder wenn eine weitere Basis-Funktionsschicht auf eine bereits vorhandene Basis-Funktionsschicht aufgetragen werden soll, eine vierte Kontaktschicht-Auftragungseinrichtung; und optional, wenn eine Basis-Funktionsschicht strukturiert werden soll, eine vierte Kontaktschicht-Strukturierungsvorrichtung.

Die erfindungsgemäße Vorrichtung kann ein drittes Walzenpaar zum Zusammenlegen des zweiten Basissubstrates mit einem Substratverbund, der das Decksubstrat und die Struktur-Funktionsschicht aufweist oder daraus besteht, aufweisen. Die Walzen des dritten Walzenpaares können unter Ausbildung eines Spaltes voneinander beabstandet sein. In dem Spalt können der in der zweiten Prozess-Station erhaltene Substratverbund und das zweite Basissubstrat zusammengeführt werden. Vorzugsweise liegt dabei der Substratverbund mit seiner Deck-Trägerlage an einer Walze des dritten Walzenpaares an, während die Basis-Trägerlage des zweiten Basissubstrates der anderen Walze des dritten Walzenpaares zugewandt ist. Das dritte Walzenpaar kann zur Herstellung eines Substratverbundes dienen, der aus dem zweiten Basissubstrat, einer Struktur-Funktionsschicht und einem Decksubstrat besteht. Die erfindungsgemäße Vorrichtung kann ein weiteres Paar von Kalibrierungswalzen zur Einstellung der Dicke dieses Substratverbundes aufweisen. Die erfindungsgemäße Vorrichtung kann eine Basissubstrat-Strukturierungsvorrichtung zur Strukturierung der Basis-Trägerlage des zweiten Basissubstrates aufweisen. Die Basissubstrat-Strukturierungsvorrichtung ist vorzugsweise nach dem dritten Walzenpaar angeordnet. Sie kann nach dem weiteren Paar von Kalibrierungswalzen angeordnet sein.

Die erfindungsgemäße Vorrichtung kann eine Konfektionseinrichtung zur Konfektionierung des Substratverbundes und/oder eine Vereinzelungseinrichtung zur Vereinzelung (engl. Dicing) des Substratverbundes aufweisen.

Die erfindungsgemäße Vorrichtung kann weitere Prozess-Stationen aufweisen, wenn der Substratverbund weitere Struktur-Funktionsschichten aufweisen soll. Eine weitere Prozess-Station unterscheidet sich von der ersten und der zweiten Prozess-Station dadurch, dass die Materialschicht auf eine andere Lage, beispielsweise eine andere Struktur-Funktionsschicht, aufgebracht wird.

Die erfindungsgemäße Vorrichtung kann eine oder mehrere Einrichtungen zum Aufbringen einer oder mehrerer Elektronikkomponenten oder einer oder mehrerer Elektronikstrukturen auf eine Lage des Substratverbundes während dessen Herstellung aufweisen. Bei einer solchen Einrichtung kann es sich um eine Montageeinrichtung wie beispielsweise eine Einrichtung zur Pick-and-Place-Montage handeln. Die Einrichtung kann Teil einer Kontaktschicht-Auftragungseinrichtung sein. Die erfindungsgemäße Vorrichtung kann eine Rolle zum Bereitstellen einer Zwischenlage und einen Abwickler zum Abwickeln der Zwischenlage von der Rolle aufweisen. Sie kann ferner Walzen und/oder Rollen zum Führen der Zwischenlage und/oder zu deren Aufbringen auf eine andere Lage aufweisen. Die erfindungsgemäße Vorrichtung kann eine oder mehrere Einrichtungen zum Aufbringen eines polymeren Materials zum Abdichten oder Verriegeln von Zwischenräumen aufweisen. Die erfindungsgemäße Vorrichtung kann eine oder mehrere Einrichtungen zum Ausbilden eines Vakuums in Zwischenräumen aufweisen. Die erfindungsgemäße Vorrichtung kann ferner eine oder mehrere Einrichtungen zum Einbringen eines Mediums in die Zwischenräume aufweisen.

Die erfindungsgemäße Vorrichtung weist vorzugsweise Einreichungen zur synchronen Ansteuerung von Walzen und/oder Rollen der Vorrichtung auf.

Es ist ferner ein mehrlagiger Substratverbund vorgesehen. Der Substratverbund weist zumindest ein Basissubstrat, das zumindest eine Lage aufweist, ein Decksubstrat, das zumindest eine Lage aufweist, und eine Struktur-Funktionsschicht, die zwischen dem Basissubstrat und dem Decksubstrat liegt, auf. Der Substratverbund ist vorzugsweise biegsam. Er ist vorzugsweise multifunktional. Dazu kann er eine oder mehrere strukturierte Funktionslagen aufweisen. Weitere Einzelheiten des Substratverbundes sind vorstehend im Zusammenhang mit dem erfindungsgemäßen Verfahren beschrieben worden. Auf diese Einzelheiten wird zur Vermeidung von Wiederholungen verwiesen.

Der Substratverbund wird vorteilhafterweise mittels des erfindungsgemäßen Verfahrens hergestellt. Der Substratverbund wird vorzugsweise mittels eines Rolle-zu-Rolle-Verfahrens hergestellt.

Bei dem Substratverbund kann es sich um ein Vorprodukt oder ein Fertigprodukt handeln. Ein Vorprodukt ist ein Substratverbund, auf den zumindest eine weitere Lage und/oder zumindest eine weitere Schicht aufgebracht wird. Zum Aufbringen einer weiteren Lage und/oder einer weiteren Schicht kann vorgesehen sein, das Basissubstrat von einem Substratverbund zu entfernen. Nach der Entfernung des Basissubstrates kann auf die dann freiliegende Flächenseite des verbliebenen Substratverbundes zumindest eine weitere Lage und/oder zumindest eine weitere Schicht aufgebracht werden. Es kann vorgesehen, dass nach dem Aufbringen der zumindest einen weiteren Lage und/oder der zumindest einen weiteren Schicht erneut ein Basissubstrat auf den Substratverbund aufgebracht wird. Ein Basissubstrat, das während der Herstellung eines Substratverbundes entfernt werden soll, besteht vorteilhafterweise nur aus einer Basis-Trägerlage. Ein Fertigprodukt ist ein Substratverbund, auf den keine weitere Lage und/oder Schicht aufgebracht wird. Die erfindungsgemäße Vorrichtung kann mehr Einrichtungen zum Aufbringen von Schichten und/oder Lagen aufweisen, als für die Herstellung eines bestimmten Fertigproduktes erforderlich sind. Diese Einrichtungen sind dann außer Funktion, also inaktiv. Sie können beispielsweise nicht in Eingriff oder ausgeschwenkt sein. Das Fertigprodukt kann zu einer Konfektionseinrichtung und/oder in eine Vereinzelungseinrichtung geführt werden. Es ist dabei nicht erforderlich, dass es diese Einrichtung passiert und/oder dass die Einreichung aktiv ist.

Die Erfindung ermöglicht die Herstellung von Substratverbünden, die eine Vielzahl von Funktionen erfüllen können. Die Erfindung stellt ein skalierbares, kontinuierliches Rolle-zu-Rolle-Verfahren bereit. Mittels des erfindungsgemäßen Verfahrens und der erfindungsgemäßen Vorrichtung kann ein hohes Einsparpotential an Rohstoffen, Energie und Zeit erreicht werden. Die Erfindung ermöglicht darüberhinaus die Herstellung von Substratverbünden mit neuartigen Funktionen, die durch die hohe Integrationsdichte zu einer weiten Verbreitung beitragen können.

Die Erfindung ermöglicht die Herstellung von biegsamen, multifunktionalen Substratverbünden, die strukturierte mehrlagige Funktionsschichten aufweisen können. Die Erfindung stellt ein Verfahren zur Herstellung von multifunktionalen Substratverbünden mit strukturierten Funktionsschichten mittels Rolle-zu-Rolle-Technologie bereit. Insbesondere die strukturierten mehrlagigen Funktionsschichten ermöglichen die Verwendung der Substratverbünde, beispielsweise in der Fluidik und/oder Fluidtechnik, in der Sensortechnik und bei LAB-on-Chip-Lösungen. Außerdem können die strukturierten mehrlagigen Funktionsschichten genutzt werden, um Funktionen wie optische Effekte, Dekore, Sicherheitsmerkmale usw. zu realisieren.

Die Substratverbünde können biegsam sein. Das ist aber nicht zwingend erforderlich. Der Substratverbund kann die vorstehend erläuterten Lagen und Schichten in nahezu beliebiger Anordnung aufweisen. Der Substratverbund kann Lagen und Schichten, beispielsweise die Struktur-Funktionsschicht, mehrfach aufweisen. Bei einer hohen Zahl von Lagen und Schichten entsteht jedoch ein Substratverbund, dessen Dicke derart hoch ist, dass der Substratverbund nicht mehr biegsam und damit nicht mehr aufrollbar ist. Ein solcher Substratverbund kann jedoch durch Konfektionierung, d. h. Zuschnitt, vom Bahnlauf abgetrennt und abgestapelt werden. Es kann vorgesehen sein, dass die Biegebelastungen mit Fortschreiten des erfindungsgemäßen Verfahrens schrittweise verringert werden.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: eine schematische Schnittdarstellung einer ersten Ausführungsform eines Basissubstrates, das eine Basis-Trägerlage aufweist, auf der eine Basis-Funktionsschicht angeordnet ist;
- Fig. 2: eine schematische Schnittdarstellung einer zweiten Ausführungsform eines Basissubstrates, das eine Basislage aufweist, auf der eine Basis-Funktionsschicht und eine Basis-Trägerlage angeordnet sind;
- Fig. 3: eine schematische Schnittdarstellung einer ersten Ausführungsform eines Substratverbundes, der ein Basissubstrat und eine Struktur-Funktionsschicht aufweist (Fig. 3A: teilweise Draufsicht; Fig. 3B: teilweise Ansicht von unten);
- Fig. 4: eine schematische Darstellung einer zweiten Ausführungsform eines Substratverbundes, der ein Basissubstrat, eine Struktur-Funktionsschicht und ein Decksubstrat aufweist;
- Fig. 4A: eine schematische Darstellung einer dritten Ausführungsform eines Substratverbundes, der ein Basissubstrat, eine Struktur-Funktionsschicht und ein Decksubstrat aufweist, wobei das Basissubstrat weder eine Basislage noch eine Basis-Funktionsschicht aufweist;
- Fig. 5: eine schematische Darstellung einer vierten Ausführungsform eines Substratverbundes, der eine Struktur-Funktionsschicht und ein Decksubstrat, aber kein Basissubstrat aufweist;
- Fig. 6: eine schematische Darstellung einer fünften Ausführungsform eines Substratverbundes, der eine erste Struktur-Funktionsschicht, eine zweite Struktur-Funktionsschicht und ein Decksubstrat aufweist;
- Fig. 7: eine schematische Darstellung einer sechsten Ausführungsform eines Substratverbundes, der ein Basissubstrat, eine erste Struktur-Funktionsschicht, eine zweite Struktur-Funktionsschicht und ein Decksubstrat aufweist;
- Fig. 8: eine schematische Darstellung einer Ausführungsform einer erfindungsgemäßen Vorrichtung zur Herstellung des in Fig. 4 oder Fig. 7 gezeigten Substratverbundes;
- Fig. 9: eine Detaildarstellung einer Prozess-Station von Fig. 8; und
- Fig. 10: eine schematische Darstellung einer siebten Ausführungsform eines Substratverbundes, der ein Basissubstrat, eine Struktur-Funktionsschicht und ein Decksubstrat, in das Elektronikstrukturen eingebettet sind, aufweist.

In den Zeichnungen haben gleiche Bezugszeichen dieselbe Bedeutung, sofern nichts anderes angegeben ist.

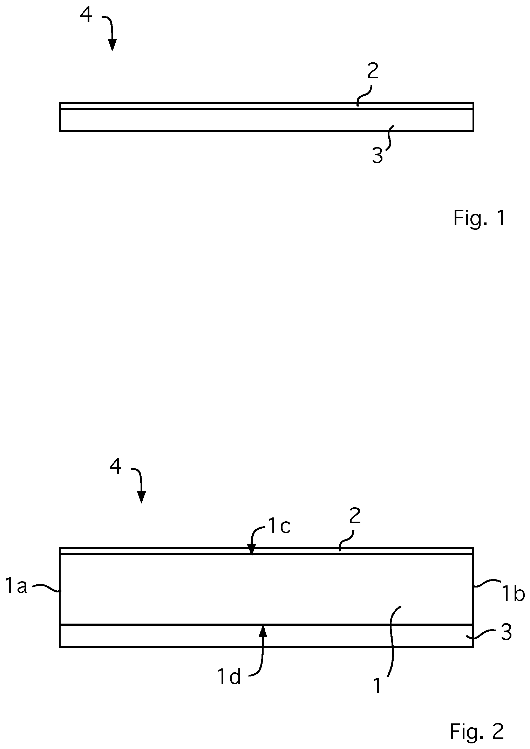

Eine erste Ausführungsform eines Basissubstrates 4 ist in Fig. 1 als Schnittdarstellung gezeigt, wobei die Schnittebene quer zur Haupterstreckungsrichtung des Basissubstrates 4 liegt. In Fig. 1 ist die Haupterstreckungsrichtung des Basissubstrates 4 die Flächennormale zur Papierebene. Das Basissubstrat besteht aus einer Basis-Trägerlage 3, die auf einer ihrer beiden Flächenseiten eine Basis-Funktionsschicht 2 aufweist, bei der es sich um eine Kontaktschicht handelt. Die zweite Flächenseite der Basis-Trägerlage 3 liegt frei.

In Fig. 2 ist eine zweite Ausführungsform eines Basissubstrates 4 gezeigt, das eine Basislage 1 aufweist. Die Basislage 1 weist Längskanten 1a, 1b auf. Sie weist ferner eine erste Flächenseite 1c, die in Fig. 2 deren Oberseite ist, und eine zweite Flächenseite 1d auf, die in Fig. 2 deren Unterseite ist. Auf der ersten Flächenseite 1c ist eine Basis-Funktionsschicht 2 angeordnet, bei der es sich um eine Kontaktschicht handelt. Auf der zweiten Flächenseite 1d der Basislage 1 ist eine Basis-Trägerlage 3 angeordnet. Die Basis-Trägerlage 3 bedeckt die zweite Flächenseite 1d vollständig.

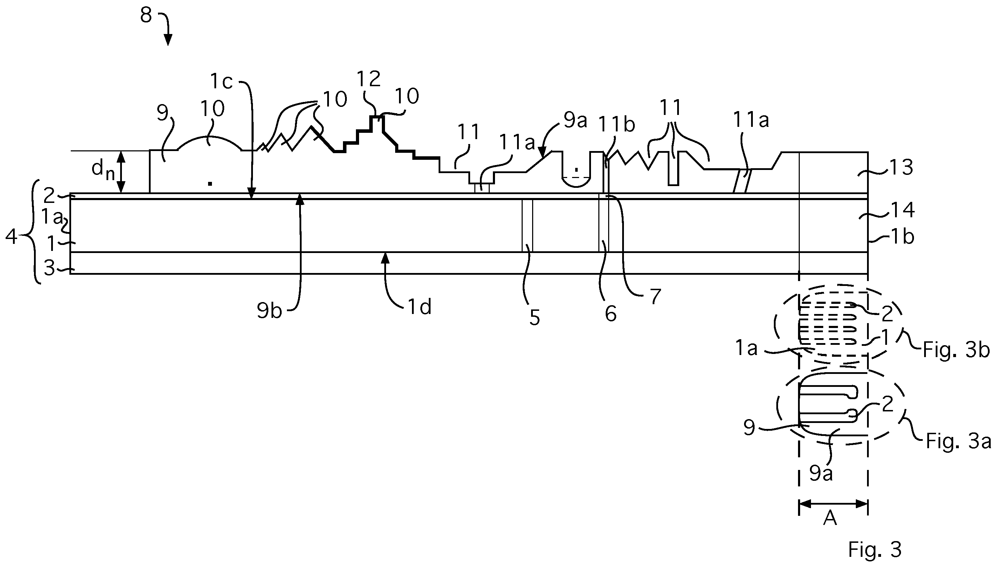

Das Basissubstrat 4 kann auf einer Rolle bereitgestellt werden. Zur Aufbringung einer Materialschicht, die zum Ausbilden einer Struktur-Funktionsschicht 9 bestimmt ist, auf das Basissubstrat 4 wird das Basissubstrat 4 von der Rolle abgewickelt. Nach dem Abwickeln des Basissubstrates 4 von der Rolle können in die Basislage 1 und/oder die Kontaktschicht 2 Öffnungen eingebracht werden. In Fig. 3 ist ein Basissubstrat 4 gezeigt, das der in Fig. 2 gezeigten Ausführungsform eines Basissubstrates entspricht, außer das zusätzlich Öffnungen in die Basislage 1 und die Kontaktschicht 2 eingebracht sind.

Die Basislage 1 weist erste durchgehende Öffnungen 5 und zweite durchgehende Öffnungen 6 auf. Die Kontaktschicht 2 weist durchgehende Öffnungen 7 auf. Es ist in Fig. 3 zu erkennen, dass sich die ersten durchgehenden Öffnungen 5 der Basislage 1 von deren zweiter Flächenseite 1d bis zu deren erster Flächenseite 1c erstrecken, aber von der Kontaktschicht 2 verschlossen sind. Es ist in Fig. 3 ferner zu erkennen, dass sich die zweiten durchgehenden Öffnungen 6 der Basislage 1 von deren zweiter Flächenseite 1d bis zu deren erster Flächenseite 1c erstrecken und durchgehende Öffnungen 7 in der Kontaktschicht 2 fluchtend zu den zweiten durchgehenden Öffnungen 6 der Basislage 1 ausgebildet sind, so dass eine zweite durchgehenden Öffnung 6 der Basislage 1 und die dazu fluchtende durchgehende Öffnung 7 in der Kontaktschicht 2 einen Kanal bilden, der sich von der zweiten Flächenseite 1d der Basislage 1 bis zu der Flächenseite der Kontaktschicht 2 erstrecken, die der Struktur-Funktionsschicht 9 zugewandt ist. Der Kanal kann der Zu- oder Abführung von Medien dienen. Die erste durchgehende Öffnung 5 ermöglicht eine Kontaktierung der Kontaktschicht 2 durch die Basislage 1 hindurch.

In Fig. 3 ist ein erste Ausführungsform eines Substratverbundes 8 gezeigt, der durch Aufbringen einer Materialschicht auf ein von einer Rolle abgewickeltes Basissubstrat 1 und anschließende Strukturierung der Materialschicht erhalten wird. Die erste Ausführungsform des Substratverbundes 8 ist in Fig. 3 als Schnittdarstellung gezeigt, wobei die Schnittebene quer zur Haupterstreckungsrichtung des Substratverbundes 8 liegt. In Fig. 3 ist die Haupterstreckungsrichtung des Substratverbundes 8 die Flächennormale zur Papierebene.

Durch Strukturierung der aufgebrachten Materialschicht wird die in Fig. 3 gezeigte Struktur-Funktionsschicht 9 erhalten. Die Materialschicht hat eine Nenndicke dₙ. In die Materialschicht sind mittels eines Werkzeuges positive und negative Strukturelement aufgeprägt worden. Anschließend wurde die Materialschicht ausgehärtet. Die ausgehärte Materialschicht stellt die Struktur-Funktionsschicht 9 dar, die die aufgeprägten positiven und negativen Strukturelemente 10, 11 aufweist. Die positiven und negativen Strukturelemente 10, 11 sind auf der ersten Flächenseite 9a der Struktur-Funktionsschicht 9 ausgebildet, die dem Basissubstrat abgewandt ist. Dabei erstrecken sich die negativen Strukturelemente 11a, 11b bis zum Basissubstrat 4. Die negativen Strukturelemente 11a, 11b haben somit eine Restdicke von Null. Dabei wird das negative Strukturelement 11a von der Kontaktschicht 2 verschlossen, während das negative Strukturelement 11b fluchtend zur durchgehenden Öffnung 7, die in der Kontaktschicht 2 ausgebildet ist, ausgebildet ist. Dadurch ist ein Kanal gebildet, der sich von der ersten Flächenseite 9a bis zur zweiten Flächenseite 1d der Basislage 1 erstreckt. Der Kanal kann als Medienöffnung dienen. Das negative Strukturelement 11a ermöglicht somit eine Kontaktierung der Kontaktschicht 2.

Es ist in Fig. 3 zu erkennen, dass die positiven und negativen Strukturelemente 10, 11 Makrostrukturen sind. In einem Bereich der Flächenseite 9d ist eine Mikro- und/oder Nanostruktur 12 ausgebildet.

Es ist in Fig. 3 zu erkennen, dass sich die Struktur-Funktionsschicht 9 nicht über die gesamte Breite des Basissubstrates 4 erstreckt. An ihrer Längskante 1a liegt das Basissubstrat 4 frei, was eine Kontaktierung der Kontaktschicht 2 ermöglicht. An der Längskante 1b des Basissubstrates 4 sind hingegen in einem Bereich A, der an die Längskante 1b angrenzt, Öffnungen 13 ausgebildet, die eine Kontaktierung der Kontaktschicht 2 ermöglichen. Fig. 3a zeigt eine Draufsicht auf einen Ausschnitt des Substratverbundes 8 im Bereich von Öffnungen 13, die eine Kontaktierung der Kontaktschicht 2 an der Längskante 1b des Basissubstrates 4 ermöglicht. Es ist zu erkennen, dass sich die Öffnungen 13 von der ersten Flächenseite der Struktur-Funktionsschicht 9 bis zur Kontaktschicht 2 erstrecken, so dass Bereiche der Kontaktschicht 2 von der ersten Flächenseite der Struktur-Funktionsschicht 9 aus zugänglich sind.

In der Basislage 1 sind Öffnungen 14 ausgebildet, die sich von der zweiten Flächenseite 1d der Basislage 1 bis zu deren erster Flächenseite 1c erstrecken. Die Öffnungen 14 liegen den Öffnungen 13 in der Struktur-Funktionsschicht 9 gegenüber. Fig. 3b zeigt eine Ansicht eines Ausschnittes des Substratverbundes 8 im Bereich von Öffnungen 14 von unten. Im Bereich der Öffnungen 14 liegt die Kontaktschicht 2 frei, so dass deren Kontaktierung möglich ist. Die Öffnungen 13, 14 ermöglichen somit eine Kontaktierung beider Flächenseiten der Kontaktschicht 2 an der Längskante 1b. In der Basis-Trägerlage 3 ist keine Öffnung ausgebildet, weil die Basis-Trägerlage 3 entfernt wird, nachdem der Substratverbund 8 hergestellt ist oder nachdem das Decksubstrat 15 aufgebracht ist.

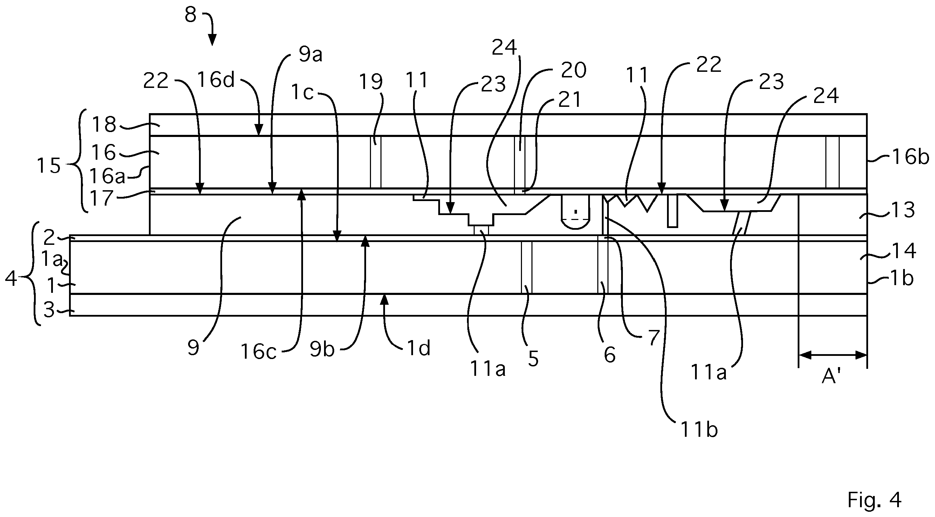

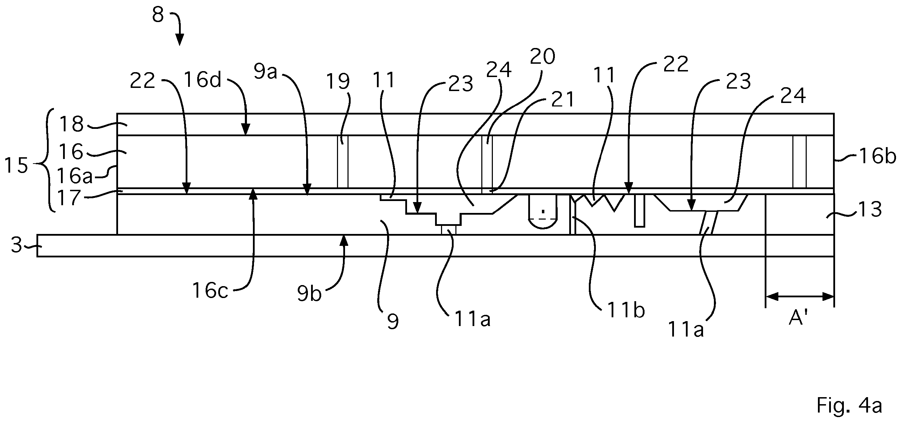

Die in Fig. 4 gezeigte zweite Ausführungsform eines Substratverbundes entspricht der in Fig. 3 gezeigten ersten Ausführungsform, außer dass auf die erste Flächenseite 9a der Struktur-Funktionsschicht 9 ein Decksubstrat 15 aufgebracht ist. In Fig. 4 ist die Struktur-Funktionsschicht 9 zur Erleichterung des Verständnisses vereinfacht dargestellt. Insbesondere sind die Mikro- und/oder Nanostrukturen 12 und die positiven Strukturelemente 10 nicht dargestellt.

Das Decksubstrat 15 weist eine Decklage 16 auf. Die Decklage 16 weist Längskanten 16a, 16b auf. Sie weist ferner einer erste Flächenseite 16c, die in Fig. 4 deren Unterseite ist, und eine zweite Flächenseite 16d auf, die in Fig. 4 deren Oberseite ist. Auf der ersten Flächenseite 16c ist eine Deck-Funktionsschicht 17 angeordnet, bei der es sich um eine Kontaktschicht handelt. Auf der zweiten Flächenseite 16d der Decklage 16 ist eine Deck-Trägerlage 18 angeordnet. Die Deck-Trägerlage 18 bedeckt die zweite Flächenseite 16d vollständig.

Das Decksubstrat 15 kann auf einer Rolle bereitgestellt werden. Zur Aufbringung des Decksubstrates 15 auf die erste Flächenseite 9a der Struktur-Funktionsschicht 9 wird das Decksubstrat 15 von der Rolle abgewickelt. Nach dem Abwickeln des Decksubstrates 15 von der Rolle können in die Decklage 16 und/oder die Kontaktschicht 17 Öffnungen eingebracht werden. In Fig. 4 ist ein Decksubstrat 15 gezeigt, in das Öffnungen in die Decklage 16 und die Kontaktschicht 17 eingebracht sind.

Die Decklage 16 weist erste durchgehende Öffnungen 19 und zweite durchgehende Öffnungen 20 auf. Die Kontaktschicht 17 weist durchgehende Öffnungen 21 auf. Es ist in Fig. 4 zu erkennen, dass sich die ersten durchgehenden Öffnungen 19 der Decklage 16 von deren zweiter Flächenseite 16d bis zu deren erster Flächenseite 16c erstrecken, aber von der Kontaktschicht 17 verschlossen sind. Es ist in Fig. 4 ferner zu erkennen, dass sich die zweiten durchgehenden Öffnungen 20 der Decklage 16 von deren zweiter Flächenseite 16d bis zu deren erster Flächenseite 16c erstrecken und durchgehende Öffnungen 21 in der Kontaktschicht 17 fluchtend zu den zweiten durchgehenden Öffnungen 20 der Decklage 16 ausgebildet sind, so dass die zweite durchgehende Öffnung 20 der Decklage 16 und die dazu fluchtende durchgehende Öffnung 21 in der Kontaktschicht 17 einen Kanal bilden, der sich von der zweiten Flächenseite 16d der Decklage 16 bis zu der Flächenseite der Kontaktschicht 17 erstreckt, die der Struktur-Funktionsschicht 9 zugewandt ist. Der Kanal kann der Zu- oder Abführung von Medien dienen. Die erste durchgehende Öffnung 19 ermöglicht eine Kontaktierung der Kontaktschicht 17 durch die Decklage 16 hindurch.

Das Decksubstrat 15 wird derart auf die Struktur-Funktionsschicht 9 aufgebracht, dass ihre Deck-Funktionsschicht 17 der äußeren Struktur-Funktionsschicht zugewandt ist. In Fig. 4 ist Kontaktschicht 17 der ersten Flächenseite 9a der Struktur-Funktionsschicht 9 zugewandt. Dabei ist das Decksubstrat 15 derart aufgebracht, dass es nur an ersten Bereichen 22 der ersten Flächenseite 9a anliegt, während es an zweiten Bereichen 23 der ersten Flächenseite 9a nicht anliegt. Dadurch werden zwischen den zweiten Bereichen 23 der ersten Flächenseite 9a und der Kontaktschicht 17 des Decksubstrates 15 Zwischenräume 24 ausgebildet. Die ersten Bereiche 22 entsprechen positiven Strukturelementen 10, die zweiten Bereiche 23 entsprechen negativen Strukturelementen 11.

Fig. 4a veranschaulicht eine dritte Ausführungsform eines Substratverbundes, die der in Fig. 4 gezeigten zweiten Ausführungsform entspricht, außer dass das Basissubstrat 4 nur aus der Basis-Trägerschicht 3 besteht. Die Basis-Trägerschicht 3 kann nach Fertigstellung des Substratverbundes 8 oder dem Aufbringen des Decksubstrates 15 entfernt werden. Die Struktur-Funktionsschicht 9 ist damit unmittelbar auf der Basis-Trägerschicht 3 durch Auftragen der Materialschicht, Strukturieren der Materialschicht und Fixieren bzw. Aushärten der strukturierten Materialschicht ausgebildet worden.

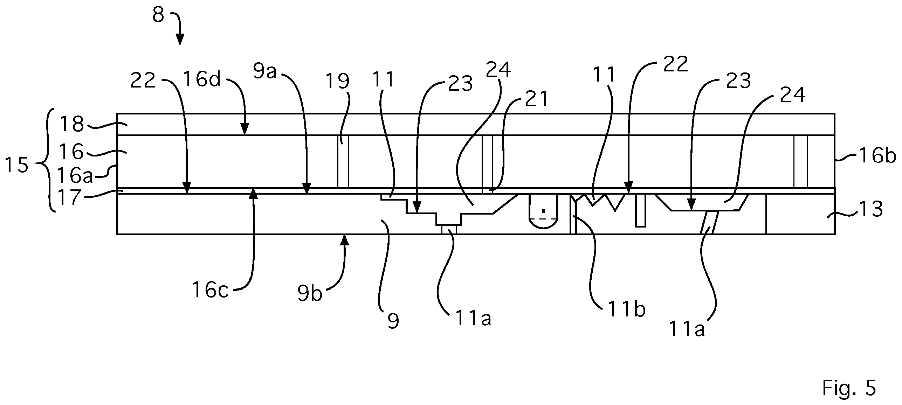

Die dritte Ausführungsform kann ein Vorprodukt sein, das der in Fig. 5 beschriebenen Weiterverarbeitung unterzogen werden kann. Im Gegensatz dazu ist die zweite Ausführungsform ein Endprodukt, das aufgrund seiner innenliegenden Struktur-Funktionsschicht 9 beispielsweise für Sensorik- und/oder Fluidik-Anwendungen nutzbar ist.

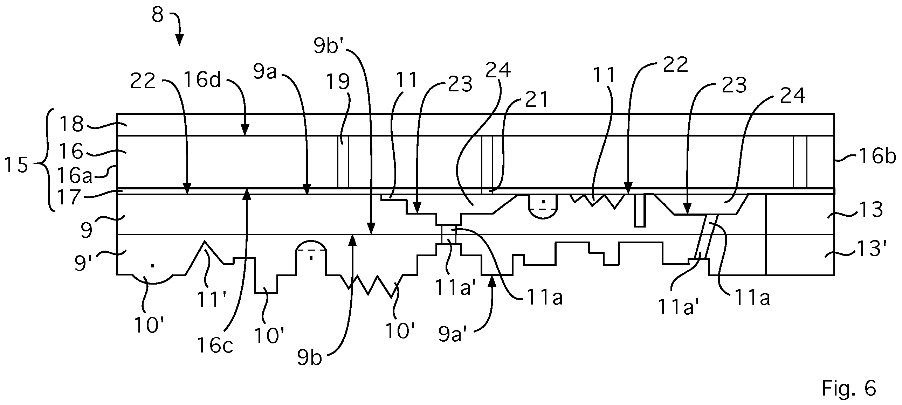

Die in Fig. 5 gezeigte vierte Ausführungsform eines Substratverbundes entspricht der Fig. 4a gezeigten dritten Ausführungsform, außer dass das Basissubstrat entfernt worden ist. Damit liegt die zweite Flächenseite 9b der Struktur-Funktionsschicht 9 frei. Sie ist damit zugänglich für eine weitere Bearbeitung, deren Ergebnis in Fig. 6 gezeigt ist. Die in Fig. 6 gezeigte Ausführungsform des Substratverbundes ist ein mehrlagiger Multifunktions-Substratverbund.

Die in Fig. 6 gezeigte fünfte Ausführungsform eines Substratverbundes entspricht der Fig. 5 gezeigten vierten Ausführungsform, außer dass der Substratverbund 8 zusätzlich zu der ersten Struktur-Funktionsschicht 9 eine zweiten Struktur-Funktionsschicht 9' aufweist. In Fig. 6 kennzeichnen Bezugszeichen, die einen Oberstrich aufweisen, Merkmale der zweiten Struktur-Funktionsschicht 9', wobei deren Bedeutung denen der Bezugszeichen gleicher Nummer, die im Zusammenhang mit der ersten Struktur-Funktionsschicht 9 verwendet werden, entspricht.

Zur Ausbildung der zweiten Funktionsschicht 9' wird eine weitere Materialschicht auf die freiliegende, zweite Flächenseite 9b der ersten Struktur-Funktionsschicht 9 aufgebracht wird. Diese Materialschicht wird dann einer Strukturierung unterzogen, wie dies bereits im Zusammenhang mit der ersten Struktur-Funktionsschicht 9 beschrieben ist. Die strukturierte Materialschicht wird dann einer Fixierung und/oder Aushärtung unterzogen. Ebenso wie die erste Struktur-Funktionsschicht 9 kann die zweite Struktur-Funktionsschicht 9 Mikro- und/oder Nanostrukturen aufweisen.

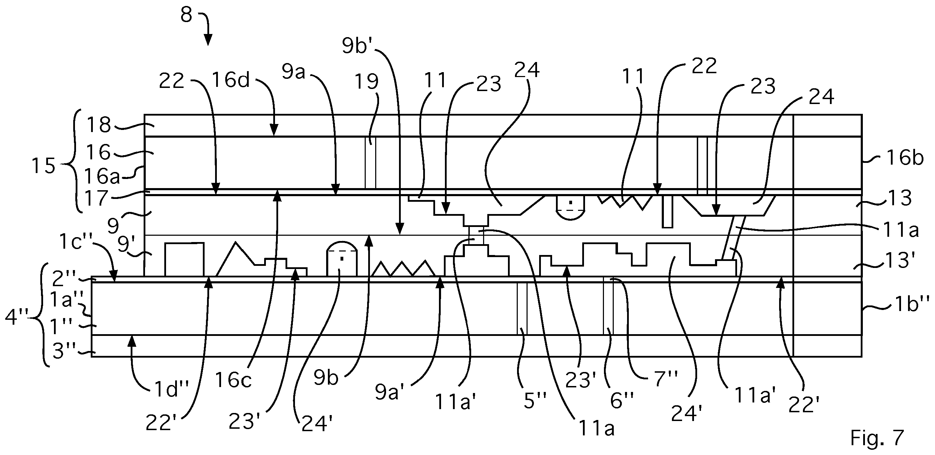

Es ist in Fig. 6 zu erkennen, dass die zweite Struktur-Funktionsschicht 9' mit ihrer zweiten Flächenseite 9b' an der zweiten Flächenseite 9b der ersten Struktur-Funktionsschicht 9 anliegt. Die erste Flächenseite 9a' der zweiten Struktur-Funktionsschicht 9' liegt frei. Es ist in Fig. 6 außerdem zu erkennen, dass negative Strukturelemente 11a, die in der ersten Struktur-Funktionsschicht 9 ausgebildet sind, fluchtend zu den negativen Strukturelementen 11a' in der zweiten Struktur-Funktionsschicht 9' ausgebildet sind. Damit können beispielsweise Medien durch die erste und zweite Struktur-Funktionsschicht geführt werden. Auf die zweite Flächenseite 9a' der zweiten Struktur-Funktionsschicht 9' kann nun erneut ein Basissubstrat 4" aufgebracht werden, wie in Fig. 7 gezeigt ist.

Die in Fig. 7 gezeigte sechste Ausführungsform eines Substratverbundes entspricht der in Fig. 6 gezeigten fünften Ausführungsform, außer dass der Substratverbund 8 zusätzlich ein Basissubstrat 4" aufweist. In Fig. 7 kennzeichnen Bezugszeichen, die zwei Oberstriche aufweisen, Merkmale des Basissubstrates 4", wobei deren Bedeutung denen der Bezugszeichen gleicher Nummer, die im Zusammenhang mit dem in Fig. 3 gezeigten Basissubstrat 4 verwendet werden, entspricht. Das in Fig. 7 gezeigte Basissubstrat 4" weist den gleichen Aufbau wie das in Fig. 3 gezeigte Basissubstrat 4 auf. Das Basissubstrat 4" wird auf einer Rolle bereitgestellt und von dieser Rolle abgewickelt, um es auf die erste Flächenseite 9a' der zweiten Struktur-Funktionsschicht 9' aufzubringen. Die in Fig. 7 gezeigte Ausführungsform des Substratverbundes ist ein mehrlagiger Multifunktions-Substratverbund und ein Fertigprodukt. Er kann eine Vielzahl an anwendungsspezifischen Funktionen bieten, die auf kleinstem Raum integriert und rundum gekapselt sind. Der Substratverbund ist sofort einsatzbereit. Die in Fig. 7 gezeigte Ausführungsform kann beispielsweise aus dem in Fig. 4a gezeigten Vorprodukt hergestellt werden.

Das Basissubstrat 4" wird derart auf die zweite Struktur-Funktionsschicht 9' aufgebracht, dass seine Kontaktschicht 2" der ersten Flächenseite 9a' der zweiten Struktur-Funktionsschicht 9' zugewandt ist. Dabei ist das Basissubstrat 4" derart aufgebracht, dass es nur an ersten Bereichen 22' der ersten Flächenseite 9a' anliegt, während es an zweiten Bereichen 23' der ersten Flächenseite 9a' nicht anliegt. Dadurch werden zwischen den zweiten Bereichen 23' der ersten Flächenseite 9a' und der Kontaktschicht 2" des Basissubstrates 4" Zwischenräume 24' ausgebildet. Die ersten Bereiche 22' entsprechen positiven Strukturelementen 10', die zweiten Bereiche 23' entsprechen negativen Strukturelementen 11'.

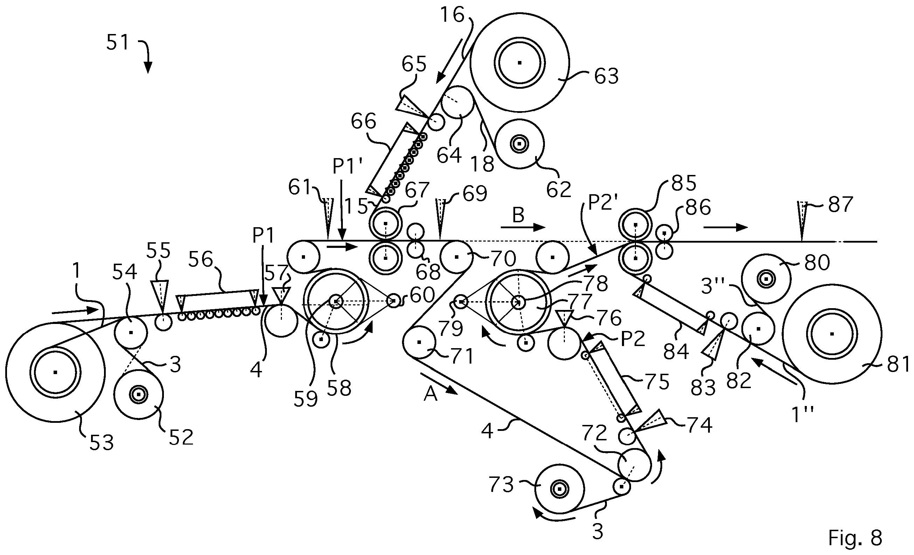

Die in Fig. 8 gezeigte Vorrichtung 51 kann zur Herstellung der in Fig. 7 gezeigten Ausführungsform eines Substratverbundes 8 verwendet werden. Die Vorrichtung kann jedoch leicht an die Herstellung einer anderen Ausführungsform eines Substratverbundes angepasst werden. Die in Fig. 8 gezeigten Pfeile kennzeichnen die Bewegungsrichtung der Substratbahnen.

Zur Herstellung des in Fig. 7 gezeigten Substratverbundes 8 wird auf einer ersten Rolle 52 die Basis-Trägerlage 3 bereitgestellt. Auf einer zweiten Rolle 53 wird eine Basislage 1 bereitgestellt. Die Basislage 1 kann bereits eine Kontaktschicht 2 tragen, wenn sie auf der zweiten Rolle 53 aufgewickelt ist. Die Basis-Trägerlage 3 und die Basislage 1 werden mittels eines Abwicklers für die Rolle 52 und mittels eines Abwicklers für die Rolle 53 von den Rollen 52 und 53 abgewickelt und an der ersten Walze 54 derart zusammengeführt, dass die Basis-Trägerlage 3 an der zweiten Flächenseite 1d der Basislage 1 anliegt. Dabei liegt nur die Basis-Trägerlage 3 an der ersten Walze 54 an, während die Basislage 1 nicht an der ersten Walze 54 anliegt. Sofern die Basislage 1 nicht bereits die Kontaktschicht 2 trägt oder wenn eine weitere Kontaktschicht auf die Kontaktschicht 2 aufgetragen werden soll, kann im Anschluss an die erste Walze 54 eine Kontaktschicht mittels einer ersten Kontaktschicht-Auftragungseinrichtung 55 aufgetragen und mittels einer ersten Kontaktschicht-Strukturierungsvorrichtung 56 strukturiert werden. Anderenfalls sind die zweite Kontaktschicht-Auftragungseinrichtung 65 und die zweite Kontaktschicht-Strukturierungsvorrichtung 66 außer Funktion. Damit ist das Basissubstrat 4 ausgebildet. Das Basissubstrat 4 gelangt nun in eine erste Prozess-Station. In Fig. 8 ist der Eintritt in die erste Prozess-Station mit der Angabe "P1" gekennzeichnet.

Zusätzlich oder alternativ zu der ersten Kontaktschicht-Auftragungseinrichtung 55 und/oder der ersten Kontaktschicht-Strukturierungsvorrichtung 56 kann eine Einrichtung zur Pick-and-Place-Montage einer oder mehrerer Elektronikkomponenten und/oder einer oder mehrerer Elektronikstrukturen vorgesehen sein. Die Einrichtung zur Pick-and-Place-Montage ist vorzugsweise vor der Prozess-Station angeordnet. Mittels der Einrichtung zur Pick-and-Place-Montage können eine oder mehrere Elektronikkomponenten und/oder eine oder mehrere Elektronikstrukturen in die Basislage eingebettet werden. An die Einrichtung zur Pick-and-Place-Montage können sich eine Einrichtung zum Aufbringen eines polymeren Materials zum Abdichten oder Verriegeln von Zwischenräumen, eine Einrichtung zum Ausbilden eines Vakuums in Zwischenräumen oder eine Einrichtung zum Einbringen eines Mediums in die Zwischenräume anschließen, die ebenfalls vor der Prozess-Station angeordnet sind.

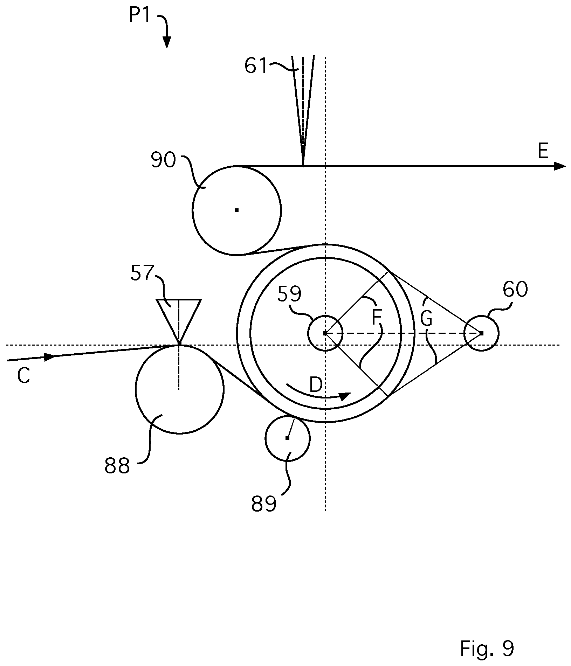

In der ersten Prozess-Station wird die Struktur-Funktionsschicht 9 ausgebildet. Dazu wird mittels einer ersten Auftragungseinrichtung 57 eine Materialschicht auf das Basissubstrat 4 aufgetragen. Die Strukturierung der Materialschicht erfolgt nun mit einer ersten Werkzeugwalze 58, mit deren Hilfe der Flächenseite der Materialschicht, die der Werkzeugwalze 58 zugewandt ist, eine Makrostruktur und, falls vorgesehen, eine Mikro- und/oder Nanostruktur aufgeprägt wird. Mittels optischer Strahlung kann die strukturierte Materialschicht dann fixiert und/oder gehärtet werden. Dazu kann innerhalb der Werkzeugwalze 58 eine erste Strahlungsquelle, die als innere Strahlungsquelle 59 bezeichnet wird, und/oder außerhalb der Werkzeugwalze eine zweite Strahlungsquelle, die als äußere Strahlungsquelle 60 bezeichnet wird, angeordnet sein (siehe auch Fig. 9). Ist eine erste Strahlungsquelle 59 vorgesehen, so weist die erste Werkzeugwalze 58 einen Abschnitt auf, an der die Materialschicht anliegt und der für die optische Strahlung durchlässig ist. Ist eine zweite Strahlungsquelle 60 vorgesehen, so sollte das Basissubstrat 4 für die optische Strahlung durchlässig sein.

Der Substratverbund besteht nun aus dem Basissubstrat 4 und einer ausgehärteten und strukturierten Materialschicht, die die erste Struktur-Funktionsschicht 9 darstellt. Es kann nun vorgesehen sein, dass dieser Substratverbund nun zu einer ersten Strukturierungseinrichtung 61 geführt wird, in der die ausgehärtete und strukturierte Materialschicht einer weiteren Strukturierung unterzogen wird. Das ist jedoch nicht zwingend erforderlich. Die erste Strukturierungseinrichtung 61 ist dann außer Funktion. Der Substratverbund verlässt nun die erste Prozess-Station. In Fig. 8 ist der Austritt aus der ersten Prozess-Station mit der Angabe "P1'" gekennzeichnet.

Im Anschluss an die erste Prozess-Station wird das Decksubstrat 15 auf die erste Struktur-Funktionsschicht 9 aufgetragen, und zwar derart, dass das Decksubstrat 15 der ersten Struktur-Funktionsschicht 9 zugewandt ist.

Zur Herstellung des Decksubstrates 15 wird auf einer dritten Rolle 62 die Deck-Trägerlage 18 bereitgestellt. Auf einer vierten Rolle 63 wird die Decklage 16 bereitgestellt. Die Decklage 16 kann bereits eine Kontaktschicht 17 tragen, wenn sie auf der vierten Rolle 63 aufgewickelt ist. Deck-Trägerlage 18 und die Decklage 16 werden mittels eines Abwicklers für die Rolle 62 und mittels eines Abwicklers für die Rolle 63 von den Rollen 62 und 63 abgewickelt und an der zweiten Walze 64 derart zusammengeführt, dass die Deck-Trägerlage 18 an der zweiten Flächenseite 16d der Decklage 16 anliegt. Dabei liegt nur die Deck-Trägerlage 18 an der zweiten Walze 64 an, während die Decklage 16 nicht an der zweiten Walze 64 anliegt. Sofern die Decklage 16 nicht bereits die Kontaktschicht 17 trägt oder wenn eine weitere Kontaktschicht auf die Kontaktschicht aufgetragen werden soll, kann im Anschluss an die zweite Walze 64 eine Kontaktschicht mittels einer zweiten Kontaktschicht-Auftragungseinrichtung 65 aufgetragen und mittels einer zweiten Kontaktschicht-Strukturierungsvorrichtung 66 strukturiert werden. Anderenfalls sind die zweite Kontaktschicht-Auftragungseinrichtung 65 und die zweite Kontaktschicht-Strukturierungsvorrichtung 66 außer Funktion. Damit ist das Decksubstrat 15 ausgebildet. Das Decksubstrat 15 gelangt nun zu einem ersten Walzenpaar 67.

Zusätzlich oder alternativ zu der zweiten Kontaktschicht-Auftragungseinrichtung 65 und/oder der zweiten Kontaktschicht-Strukturierungsvorrichtung 66 kann eine Einrichtung zur Pick-and-Place-Montage einer oder mehrerer Elektronikkomponenten und/oder einer oder mehrerer Elektronikstrukturen vorgesehen sein. Die Einrichtung zur Pick-and-Place-Montage ist vorzugsweise vor dem ersten Walzenpaar 67 angeordnet. Mittels der Einrichtung zur Pick-and-Place-Montage können eine oder mehrere Elektronikkomponenten und/oder eine oder mehrere Elektronikstrukturen in die Decklage eingebettet werden. An die Einrichtung zur Pick-and-Place-Montage können sich eine Einrichtung zum Aufbringen eines polymeren Materials zum Abdichten oder Verriegeln von Zwischenräumen, eine Einrichtung zum Ausbilden eines Vakuums in Zwischenräumen oder eine Einrichtung zum Einbringen eines Mediums in die Zwischenräume anschließen, die ebenfalls vor dem ersten Walzenpaar angeordnet sind.

Die Walzen des ersten Walzenpaares 67 sind unter Ausbildung eines Spaltes voneinander beabstandet. In dem Spalt werden der in der ersten Prozess-Station erhaltene Substratverbund und das Decksubstrat 15 zusammengeführt. Dabei liegt der Substratverbund mit seiner Basis-Trägerlage 3 an einer Walze des Walzenpaares 67 an, während die Deck-Trägerlage 18 der anderen Walze des Walzenpaares 67 zugewandt ist. Mittels des ersten Walzenpaares 67 wird ein Substratverbund erhalten, der aus einem Basissubstrat 4, einer ersten Struktur-Funktionsschicht 9 und einem Decksubstrat 15 besteht. Dieser Substratverband kann nun ein Paar 68 von Kalibrierungswalzen passieren, was jedoch nicht zwingend erforderlich ist. In letzterem Fall ist das Paar 68 von Kalibrierungswalzen außer Funktion. Mittels der Kalibrierungswalzen kann die Dicke des Substratverbundes eingestellt werden. Im Anschluss an das Paar 68 von Kalibrierungswalzen kann der Substratverbund eine Decksubstrat-Strukturierungsvorrichtung 69 passieren, in der die Deck-Trägerlage 18 einer Strukturierung unterzogen werden kann. Ist keine Strukturierung der Deck-Trägerlage 18 vorgesehen, so ist die Decksubstrat-Strukturierungsvorrichtung 69 außer Funktion.

Zur Herstellung des in Fig. 7 gezeigten Substratverbundes 8 wird anschließend das Basissubstrat 4 von dem Substratverbund, der das erste Walzenpaar 67 und, falls vorgesehen, das Paar 68 von Kalibrierungswalzen passiert hat, entfernt (Pfeil A). Wird das Basissubstrat 4 entfernt, so kann es ausreichend sein, dass das Basissubstrat nur aus der Basis-Trägerlage 3 besteht. Zur Entfernung des Basissubstrates 4 wird der Substratverbund über eine dritte Walze 70 und über eine vierte Walze 71 zu einem zweiten Walzenpaar 72 geführt, an dem das Basissubstrat 4 von dem Substratverbund abgetrennt wird. Das Basissubstrat 4 wird mittels eines Aufwicklers auf einer fünften Rolle 73 aufgewickelt. Der verbliebene Substratverbund besteht nur aus der ersten Struktur-Funktionsschicht 9 und dem Decksubstrat 15. Im Anschluss an das zweite Walzenpaar 72 kann optional auf den verbleibenden Substratverbund eine Kontaktschicht mittels einer dritten Kontaktschicht-Auftragungseinrichtung 74 aufgetragen werden. Dabei wird diese optionale Kontaktschicht auf die zweite Flächenseite 9b der ersten Struktur-Funktionsschicht 9 aufgetragen, so dass diese später zwischen der ersten und der zweiten Struktur-Funktionsschicht 9, 9' angeordnet sein wird. Die optionale Kontaktschicht kann mittels einer dritten Kontaktschicht-Strukturierungsvorrichtung 75 strukturiert werden. Wird keine optionale Kontaktschicht aufgetragen, so sind die dritte Kontaktschicht-Auftragungseinrichtung 74 und die zweite Kontaktschicht-Strukturierungsvorrichtung 66 außer Funktion.

Auf der zweiten Flächenseite 9b der ersten Struktur-Funktionsschicht 9 oder, wenn diese eine Kontaktschicht trägt, auf der Kontaktschicht, wird nun die zweite Struktur-Funktionsschicht 9' ausgebildet. Dazu wird mittels einer zweiten Auftragungseinrichtung 76 eine Materialschicht auf die zweite Flächenseite 9b der ersten Struktur-Funktionsschicht 9 oder, wenn diese eine Kontaktschicht trägt, auf die Kontaktschicht, aufgetragen. Die Strukturierung der Materialschicht erfolgt mit einer zweiten Werkzeugwalze 77, mit deren Hilfe der Flächenseite der Materialschicht, die der zweiten Werkzeugwalze 77 zugewandt ist, eine Makrostruktur und, falls vorgesehen, eine Mikro- und/oder Nanostruktur aufgeprägt wird. Mittels optischer Strahlung kann die strukturierte Materialschicht dann fixiert und/oder gehärtet werden. Dazu kann innerhalb der zweiten Werkzeugwalze 77 eine erste Strahlungsquelle, die als innere Strahlungsquelle 78 bezeichnet wird, und/oder außerhalb der Werkzeugwalze eine zweite Strahlungsquelle, die als äußere Strahlungsquelle 79 bezeichnet wird, angeordnet sein (siehe auch Fig. 9). Ist eine innere Strahlungsquelle 78 vorgesehen, so weist die zweite Werkzeugwalze einen Abschnitt auf, an dem die Materialschicht anliegt und der für die optische Strahlung durchlässig ist. Ist eine äußere Strahlungsquelle 79 vorgesehen, so sollte das Decksubstrat 15 für die optische Strahlung durchlässig sein.

Der Substratverbund, der nun aus dem Decksubstrat 15, der ersten Struktur-Funktionsschicht 9 und der zweiten Struktur-Funktionsschicht 9' besteht, verlässt nun die zweite Prozess-Station. In Fig. 8 ist der Austritt der zweiten Prozess-Station mit der Angabe "P2'" gekennzeichnet. Auf diesen Substratverbund wird nun das Basissubstrat 4" aufgebracht.

Zur Herstellung des zweiten Basissubstrates 4" wird auf einer sechsten Rolle 80 die Basis-Trägerlage 3" bereitgestellt. Auf einer siebten Rolle 81 wird eine Basislage 1" bereitgestellt. Die Basislage 1" kann bereits eine Kontaktschicht 2" tragen, wenn sie auf der siebten Rolle 81 aufgewickelt ist. Die Basis-Trägerlage 3" und die Basislage 1" werden jeweils mittels eines Abwicklers für die Rolle 80 und mittels eines Abwicklers für die Rolle 81 von den Rollen 80 und 81 abgewickelt und an der fünften Walze 82 derart zusammengeführt, dass die Basis-Trägerlage 3" an der zweiten Flächenseite 1d" der Basislage 1" anliegt. Dabei liegt nur die Basis-Trägerlage 3" an der fünften Walze 82 an, während die Basislage 1" nicht an der fünften Walze 82 anliegt. Sofern die Basislage 1" nicht bereits die Kontaktschicht 2" trägt oder wenn eine weitere Kontaktschicht auf die Kontaktschicht 2" aufgetragen werden soll, kann im Anschluss an die fünfte Walze 82 eine Kontaktschicht mittels einer vierten Kontaktschicht-Auftragungseinrichtung 83 aufgetragen und mittels einer vierten Kontaktschicht-Strukturierungsvorrichtung 84 strukturiert werden. Anderenfalls sind die vierte Kontaktschicht-Auftragungseinrichtung 83 und die vierte Kontaktschicht-Strukturierungsvorrichtung 84 außer Funktion. Damit ist das zweite Basissubstrat 4" ausgebildet. Das Basissubstrat 4" gelangt zu einem dritten Walzenpaar 85.

Zusätzlich oder alternativ zu der vierten Kontaktschicht-Auftragungseinrichtung 83 und/oder der vierten Kontaktschicht-Strukturierungsvorrichtung 84 kann eine Einrichtung zur Pick-and-Place-Montage einer oder mehrerer Elektronikkomponenten und/oder einer oder mehrerer Elektronikstrukturen vorgesehen sein. Die Einrichtung zur Pick-and-Place-Montage ist vorzugsweise vor dem dritten Walzenpaar 85 angeordnet. Mittels der Einrichtung zur Pick-and-Place-Montage können eine oder mehrere Elektronikkomponenten und/oder eine oder mehrere Elektronikstrukturen in die Basislage 1" eingebettet werden. An die Einrichtung zur Pick-and-Place-Montage können sich eine Einrichtung zum Aufbringen eines polymeren Materials zum Abdichten oder Verriegeln von Zwischenräumen, eine Einrichtung zum Ausbilden eines Vakuums in Zwischenräumen oder eine Einrichtung zum Einbringen eines Mediums in die Zwischenräume anschließen, die ebenfalls vor dem dritten Walzenpaar 85 angeordnet sind.

Die Walzen des dritten Walzenpaares 85 sind unter Ausbildung eines Spaltes voneinander beabstandet. In dem Spalt werden der in der zweiten Prozess-Station erhaltene Substratverbund und das zweite Basissubstrat 4" zusammengeführt. Dabei liegt der Substratverbund mit seiner Deck-Trägerlage 18 an einer Walze des Walzenpaares 85 an, während die Basis-Trägerlage 3" der anderen Walze des Walzenpaares 85 zugewandt ist. Mittels des dritten Walzenpaares 85 wird ein Substratverbund erhalten, der aus dem zweiten Basissubstrat 4", der zweiten Struktur-Funktionsschicht 9", der ersten Struktur-Funktionsschicht 9 und dem Decksubstrat 15 besteht. Der auf diese Weise hergestellte Substratverbund ist der in Fig. 7 gezeigte Substratverbund 8. Der Substratverbund kann nun ein Paar 86 von Kalibrierungswalzen passieren, was jedoch nicht zwingend erforderlich ist. Mittels der Kalibrierungswalzen kann die Dicke des Substratverbundes eingestellt werden. Anschließend kann der Substratverbund 8 in einer Konfektionseinrichtung einer Konfektionierung und/oder in einer Vereinzelungseinrichtung 87 einer Vereinzelung (engl. Dicing) unterzogen werden.

Soll hingegen das erste Basissubstrat 4 nach Austritt aus der ersten Prozess-Station von dem in der ersten Prozess-Station erhaltenen Substratverbund nicht entfernt werden (siehe Pfeil B in Fig. 8), so kann der in der ersten Prozess-Station erhaltene Substratverbund, der in Fig. 4 gezeigt ist, unmittelbar zu der Konfektionseinrichtung, um dort einer Konfektionierung unterzogen zu werden, und/oder zu der Vereinzelungseinrichtung 87, um dort einer Vereinzelung (engl. Dicing) unterzogen zu werden, geführt werden. Ein zweites Basissubstrat 4" wird dann in dem dritten Walzenpaar nicht aufgebracht. Das dritte Walzenpaar 85 und das Paar 86 von Kalibrierungswalzen sind in diesem Fall ohne Funktion.

Fig. 9 veranschaulicht eine der in Fig. 8 gezeigten Prozess-Stationen weiter. Im Folgenden werden der Aufbau und die Arbeitsweise beider Prozess-Stationen am Beispiel der ersten Prozess-Station erläutert. Die zweite Prozess-Station hat den gleichen Aufbau und die gleiche Wirkungsweise. Sie unterscheidet sich nur dadurch von der ersten Prozess-Station, dass die Materialschicht auf eine andere Substratbahn aufgebracht wird.

In der ersten Prozess-Station P1 wird die Struktur-Funktionsschicht 9 ausgebildet. Dazu wird eine Substratbahn, bei der es sich um das Basissubstrat handelt, in die erste Prozess-Station geführt (Pfeil E). Die Substratbahn wird über eine Walze 88, an der sie mit der Basis-Trägerlage 3 anliegt, an der ersten Auftragungseinrichtung 57 vorbeigeführt. Mittels der ersten Auftragungseinrichtung 57 wird eine Materialschicht auf die Substratbahn aufgetragen. Die Strukturierung der Materialschicht erfolgt anschließend mit einer ersten Werkzeugwalze 58, mit deren Hilfe der Flächenseite der Materialschicht, die der Werkzeugwalze 58 zugewandt ist, eine Makrostruktur und, falls vorgesehen, eine Mikro- und/oder Nanostruktur aufgeprägt wird. Die Drehrichtung der Werkzeugwalze 58 ist in Fig. 9 durch Pfeil D gekennzeichnet. Zum Führen der Substratbahn an der Werkzeugwalze 58 sind Walzen 89 und 90 vorgesehen, die die Substratbahn nur an deren Basis-Trägerlage 3 kontaktieren. Mittels optischer Strahlung wird die strukturierte Materialschicht auf der Substratbahn dann fixiert und/oder gehärtet. Dazu ist innerhalb der Werkzeugwalze 58 eine erste Strahlungsquelle, die als innere Strahlungsquelle 59 bezeichnet wird, und/oder außerhalb der Werkzeugwalze 58 eine zweite Strahlungsquelle, die als äußere Strahlungsquelle 60 bezeichnet wird, angeordnet. Ist eine erste Strahlungsquelle 59 vorgesehen, so weist die erste Werkzeugwalze 58 einen Abschnitt auf, an dem die Materialschicht anliegt und der für die optische Strahlung durchlässig ist. Ist eine zweite Strahlungsquelle 60 vorgesehen, so sollte die Substratbahn für die optische Strahlung durchlässig sein. Bei der optischen Strahlung kann es sich um ultraviolette Strahlung (UV), sichtbares Licht (VIS), Infrarot-Strahlung (IR) und Kombinationen dieser Strahlungen handeln.

Die erste Strahlungsquelle 59 bietet den Vorteil, dass alle Strahlen rechtwinklig auf die Materialschicht auftreffen. Dazu ist die erste Strahlungsquelle 59 vorzugsweise auf der Drehachse der Werkzeugwalze 58 angeordnet. In Fig. 9 ist der Strahlungskegel der ersten Strahlungsquelle 59 mit dem Buchstaben "F" gekennzeichnet. Die zweite Strahlungsquelle 60 bietet den Vorteil, dass sie technisch leichter zu realisieren ist, weil sie nicht in der Werkzeugwalze 58, sondern außerhalb davon angeordnet ist. In Fig. 9 ist der Strahlungskegel der zweiten Strahlungsquelle 60 mit dem Buchstaben "G" gekennzeichnet.

Nach Passieren der Werkzeugwalze 58 kann die Substratbahn, die nun die Struktur-Funktionsschicht 9, die mittels der Werkzeugwalze 58 und einer oder beiden Strahlungsquellen 59, 60 erhalten wurde, zu einer optionalen Strukturierungseinrichtung 61 und/oder einer optionalen Nachbearbeitungseinrichtung geführt werden. Mittels der optionalen Strukturierungseinrichtung 61 kann die Struktur-Funktionsschicht 9 einer weiteren Strukturierung unterzogen werden. Mittels der Nachbearbeitungseinrichtung kann die Struktur-Funktionsschicht 9 oder die gesamte Substratbahn, einschließlich der Struktur-Funktionsschicht, einer Wärmebehandlung (engl. Annealing) unterzogen werden. Die Substratbahn tritt schließlich aus der ersten Prozess-Station aus (Pfeil E).

Im Zusammenhang mit Fig. 8 ist die Herstellung der in Fig. 7 gezeigten, sechsten Ausführungsform beschrieben worden. Die in Fig. 8 gezeigte Vorrichtung kann jedoch auch zur Herstellung anderer Ausführungsformen des Substratverbundes eingesetzt werden. Für die Herstellung des jeweiligen Substratverbundes nicht benötigte Elemente, Einheiten und/oder Stationen sind dabei entweder außer Funktion oder können vollständig fehlen.

Die in Fig. 8 gezeigte Vorrichtung 51 kann so zur Herstellung der in Fig. 4a gezeigten dritten Ausführungsform des Substratverbundes 8 verwendet werden. Die dritte Ausführungsform weist keine Basislage 1 und keine Basis-Funktionsschicht 2 auf, so dass das Basissubstrat 4 nur aus der Basis-Trägerschicht 3 besteht. Die zweite Rolle 53 ist somit außer Funktion. Auf der ersten Rolle 52 wird die Basis-Trägerlage 3 bereitgestellt. Die Basis-Trägerlage 3 wird mittels des Abwicklers für die Rolle 52 von der Rolle 52 abgewickelt. Sie kann über die erste Walze 54 geführt werden. Allerdings wird die erste Walze 54 nicht zum Zusammenführen von Lagen des Basissubstrates 4 benötigt. Sie kann daher ebenfalls außer Funktion sein. Eine Kontaktschicht 2 wird nicht aufgebracht. Die erste Kontaktschicht-Auftragungseinrichtung 55 und die erste Kontaktschicht-Strukturierungsvorrichtung 56 sind somit außer Funktion. Das Basissubstrat 4, das nur aus der Basis-Trägerlage 3 besteht, gelangt nun in die erste Prozess-Station. In Fig. 8 ist der Eintritt in die erste Prozessstation mit der Angabe "P1" gekennzeichnet.

In der ersten Prozess-Station wird die Struktur-Funktionsschicht 9 ausgebildet. Dazu wird mittels der ersten Auftragungseinrichtung 57 eine Materialschicht auf das Basissubstrat 4 aufgetragen. Die Strukturierung der Materialschicht erfolgt nun mit der ersten Werkzeugwalze 58, mit deren Hilfe der Flächenseite der Materialschicht, die der Werkzeugwalze 58 zugewandt ist, eine Makrostruktur und, falls vorgesehen, eine Mikro- und/oder Nanostruktur aufgeprägt wird. Mittels optischer Strahlung kann die strukturierte Materialschicht dann fixiert und/oder gehärtet werden. Dazu kann innerhalb der Werkzeugwalze 58 eine erste Strahlungsquelle, die als innere Strahlungsquelle 59 bezeichnet wird, und/oder außerhalb der Werkzeugwalze eine zweite Strahlungsquelle, die als äußere Strahlungsquelle 60 bezeichnet wird, angeordnet sein (siehe auch Fig. 9). Ist eine erste Strahlungsquelle 59 vorgesehen, so weist die erste Werkzeugwalze 58 einen Abschnitt auf, an dem die Materialschicht anliegt und der für die optische Strahlung durchlässig ist. Ist eine zweite Strahlungsquelle 60 vorgesehen, so sollte das Basissubstrat 4 für die optische Strahlung durchlässig sein.

Der Substratverbund besteht nun aus dem Basissubstrat 4 und einer ausgehärteten und strukturierten Materialschicht, die die erste Struktur-Funktionsschicht 9 darstellt. Es kann nun vorgesehen sein, dass dieser Substratverbund zu der ersten Strukturierungseinrichtung 61 geführt wird, in der die ausgehärtete und strukturierte Materialschicht einer weiteren Strukturierung unterzogen wird. Das ist jedoch nicht zwingend erforderlich. Die erste Strukturierungseinrichtung 61 ist dann außer Funktion. Der Substratverbund verlässt nun die erste Prozess-Station. In Fig. 8 ist der Austritt aus der ersten Prozess-Station mit der Angabe "P1'" gekennzeichnet.

Im Anschluss an die erste Prozess-Station wird das Decksubstrat 15 auf die erste Struktur-Funktionsschicht 9 aufgetragen, und zwar derart, dass das Decksubstrat 15 der ersten Struktur-Funktionsschicht 9 zugewandt ist.

Zur Herstellung des Decksubstrates 15 wird auf der dritten Rolle 62 die Deck-Trägerlage 18 bereitgestellt. Auf der vierten Rolle 63 wird die Decklage 16 bereitgestellt. Die Decklage 16 kann bereits eine Kontaktschicht 17 tragen, wenn sie auf der vierten Rolle 63 aufgewickelt ist. Die Deck-Trägerlage 18 und die Decklage 16 werden mittels eines Abwicklers für die Rolle 62 und mittels eines Abwicklers für die Rolle 63 von den Rollen 62 und 63 abgewickelt und an der zweiten Walze 64 derart zusammengeführt, dass die Deck-Trägerlage 18 an der zweiten Flächenseite 16d der Decklage 16 anliegt. Dabei liegt nur die Deck-Trägerlage 18 an der zweiten Walze 64 an, während die Decklage 16 nicht an der zweiten Walze 64 anliegt. Sofern die Decklage 16 nicht bereits die Kontaktschicht 17 trägt oder wenn eine weitere Kontaktschicht auf die Kontaktschicht 17 aufgetragen werden soll, kann im Anschluss an die zweite Walze 64 eine Kontaktschicht mittels der zweiten Kontaktschicht-Auftragungseinrichtung 65 aufgetragen und mittels der zweiten Kontaktschicht-Strukturierungsvorrichtung 66 strukturiert werden. Anderenfalls sind die zweite Kontaktschicht-Auftragungseinrichtung 65 und die zweite Kontaktschicht-Strukturierungsvorrichtung 66 außer Funktion. Damit ist das Decksubstrat 15 ausgebildet. Das Decksubstrat 15 gelangt nun zu dem ersten Walzenpaar 67.

In dem Spalt des ersten Walzenpaares 67 werden der in der ersten Prozess-Station erhaltene Substratverbund und das Decksubstrat 15 zusammengeführt. Dabei liegt der Substratverbund mit seiner Basis-Trägerlage 3 an einer Walze des Walzenpaares 67 an, während die Deck-Trägerlage 18 der anderen Walze des Walzenpaares 67 zugewandt ist. Mittels des ersten Walzenpaares 67 wird ein Substratverbund erhalten, der aus einem Basissubstrat 4, einer ersten Struktur-Funktionsschicht 9 und einem Decksubstrat 15 besteht. Dieser Substratverband kann nun das Paar 68 von Kalibrierungswalzen passieren, was jedoch nicht zwingend erforderlich ist. In letzterem Fall ist das Paar 68 von Kalibrierungswalzen außer Funktion. Mittels der Kalibrierungswalzen kann die Dicke des Substratverbundes eingestellt werden. Im Anschluss an das Paar 68 von Kalibrierungswalzen kann der Substratverbund eine Decksubstrat-Strukturierungsvorrichtung 69 passieren, in der die Deck-Trägerlage 18 einer Strukturierung unterzogen werden kann. Ist keine Strukturierung der Deck-Trägerlage 18 vorgesehen, so ist die Decksubstrat-Strukturierungsvorrichtung 69 außer Funktion. Damit ist die in Fig. 4a gezeigten Ausführungsform hergestellt. Der Substratverbund kann entlang Pfeil B unmittelbar zu der Konfektionseinrichtung, um dort einer Konfektionierung unterzogen zu werden, und/oder zu der Vereinzelungseinrichtung 87, um dort einer Vereinzelung (engl. Dicing) unterzogen zu werden, geführt werden. Das Walzenpaar 85 und das Paar 86 von Kalibrierungswalzen sind ohne Funktion. Ebenso sind die Elemente der Vorrichtung, die an Pfeil A liegen, ohne Funktion.

Es kann jedoch alternativ vorgesehen sein, dass von der dritten Ausführungsform des Substratverbundes 8 das Basissubstrat 4 entfernt wird. Dazu wird der Substratverbund über die dritte Walze 70 und über die vierte Walze 71 zu dem zweiten Walzenpaar 72 geführt, an dem das Basissubstrat 4, das nur aus der Basis-Trägerlage 3 besteht, von dem Substratverbund abgetrennt wird. Die Basis-Trägerlage 3 wird mittels des Aufwicklers auf der fünften Rolle 73 aufgewickelt. Der verbliebene Substratverbund besteht nur aus der ersten Struktur-Funktionsschicht 9 und dem Decksubstrat 15. Nach dem Entfernen des Basissubtrates kann dann der verbleibende Substratverbund in der Konfektionseinrichtung einer Konfektionierung und/oder in der Vereinzelungseinrichtung 87 einer Vereinzelung (engl. Dicing) unterzogen werden. Die zweite Prozess-Station ist dann ohne Funktion.

Es kann jedoch auch vorgesehen sein, dass nach dem Entfernen des Basissubstrates 4 auf den verbliebenen Substratverbund eine zweite Struktur-Funktionsschicht 9' und ein zweites Basissubstrat 4" aufgebacht werden. In diesem Fall wird wiederum die in Fig. 7 gezeigte, sechste Ausführungsform erhalten. Dazu kann, wie oben im Zusammenhang mit der Herstellung der siebenten Ausführungsform ab dem zweiten Walzenpaar 72 beschrieben, vorgegangen werden.

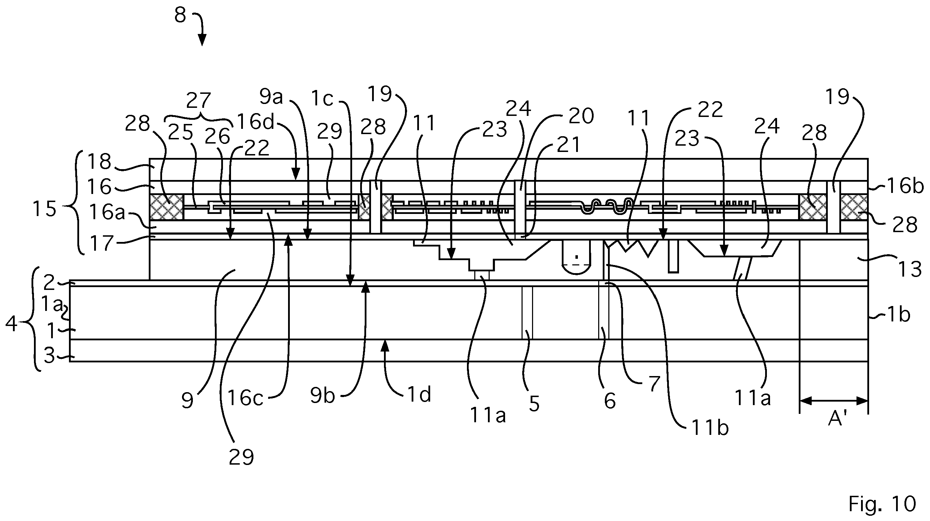

Die in Fig. 10 gezeigte siebente Ausführungsform entspricht der in Fig. 4 gezeigten zweiten Ausführungsform, außer dass in der Decklage 16 Elektronikkomponente(n) und/oder Elektronikstruktur(en) angeordnet sind. Bei den Elektronikkomponenten handelt es sich in dem gezeigten Beispiel um eine Basisplatine (engl.: Electronic board), die mit weiteren, vorzugsweise aktiven Elektronikkomponenten bestückt ist. Die Basisplatine und die weiteren Elektronikkomponenten, die auf ihr angeordnet sind, bilden jeweils eine Elektronikstruktur 27. Es ist in Fig. 10 zu erkennen, dass die Elektronikstrukturen 27 in das Decksubstrat 15 eingebettet sind. Dabei liegen die Elektronikstrukturen 27 zwischen der Deck-Funktionsschicht 17 und der Deck-Trägerlage 18.

Zwischen der Deck-Funktionsschicht 17 und der Deck-Trägerlage 18 ist eine Zwischenlage 28 vorgesehen. In der Zwischenlage 28 sind Ausnehmungen ausgebildet, in denen die Elektronikstrukturen 27 angeordnet sind. Die Zwischenlage 28 bildete eine Verriegelung oder Abdichtung. Sie riegelt die Ausnehmungen an den Längsrändern der Decklage 16 ab. Sie riegelt ferner die Ausnehmungen gegen die Öffnungen 19, 20 ab. Die Zwischenräume 29, die in der Decklage 16 zwischen den Elektronikstrukturen 27 und der Deck-Funktionsschicht 17 sowie zwischen den Elektronikstrukturen 27 und der Deck-Trägerlage 18 ausgebildet sind, können beispielsweise mit einem Medium, mit Vakuum oder mit einem polymeren Material gefüllt sein.

### Bezugszeichenliste

- 1: Basislage
- 1a: Längskante
- 1b: Längskante
- 1c: erste Flächenseite
- 1d: zweite Flächenseite
- 2: Basis-Funktionsschicht (Kontaktschicht)
- 3: Basis-Trägerlage
- 4: Basissubstrat

- 5: erste durchgehende Öffnung
- 6: zweite durchgehende Öffnung
- 7: durchgehende Öffnung
- 8: Substratverbund
- 9: Struktur-Funktionsschicht
- 9a: erste Flächenseite der Struktur-Funktionsschicht
- 9b: zweite Flächenseite der Struktur-Funktionsschicht
- 10: positives Strukturelement
- 11: negatives Strukturelement
- 11a: negatives Strukturelement mit Restdicke Null
- 11b: negatives Strukturelement mit Restdicke Null
- 12: Mikro- und/oder Nanostruktur
- 13: Öffnung
- 14: Öffnung
- 15: Decksubstrat
- 16: Decklage
- 16a: Längskante
- 16b: Längskante
- 16c: erste Flächenseite
- 16d: zweite Flächenseite
- 17: Deck-Funktionsschicht (Kontaktschicht)
- 18: Deck-Trägerlage
- 19: erste durchgehende Öffnung
- 20: zweite durchgehende Öffnung
- 21: durchgehende Öffnung
- 22: erster Bereich
- 23: zweiter Bereich
- 24: Zwischenraum
- 25: Basisplatine
- 26: Elektronikkomponente
- 27: Elektronikstruktur
- 28: Zwischenlage
- 29: Zwischenraum

- 51: Vorrichtung
- 52: erste Rolle
- 53: zweite Rolle
- 54: erste Walze

- 55: Kontaktschicht-Auftragungseinrichtung
- 56: Kontaktschicht-Strukturierungsvorrichtung
- 57: Auftragungseinrichtung
- 58: erste Werkzeugwalze
- 59: innere Strahlungsquelle
- 60: äußere Strahlungsquelle
- 61: erste Strukturierungseinrichtung
- 62: dritte Rolle
- 63: vierte Rolle
- 64: zweite Walze
- 65: Kontaktschicht-Auftragungseinrichtung
- 66: Kontaktschicht-Strukturierungsvorrichtung
- 67: erstes Walzenpaar
- 68: Paar von Kalibrierungswalzen
- 69: Decksubstrat-Strukturierungsvorrichtung
- 70: dritte Walze
- 71: vierte Walze
- 72: zweites Walzenpaar
- 73: fünfte Rolle
- 74: Kontaktschicht-Auftragungseinrichtung
- 75: Kontaktschicht-Strukturierungsvorrichtung
- 76: zweite Auftragungseinrichtung
- 77: zweite Werkzeugwalze
- 78: innere Strahlungsquelle
- 79: äußere Strahlungsquelle
- 80: sechste Rolle
- 81: siebente Rolle
- 82: fünfte Walze
- 83: Kontaktschicht-Auftragungseinrichtung
- 84: Kontaktschicht-Strukturierungsvorrichtung
- 85: drittes Walzenpaar
- 86: Paar von Kalibrierungswalzen
- 87: Vereinzelungseinrichtung
- 88: Walze
- 89: Walze
- 90: Walze

## Patentansprüche

1. Verfahren zur Herstellung eines mehrlagigen Substratverbundes (8), der zumindest ein Basissubstrat (4), das zumindest eine Lage (1, 3) aufweist, ein Decksubstrat (15), das zumindest eine Lage (16, 18) aufweist, eine Struktur-Funktionsschicht (9), die zwischen dem Basissubstrat (4) und dem Decksubstrat (15) liegt, und eine Elektronikstruktur (27) aufweist, wobei zur Herstellung des mehrlagigen Substratverbundes (8) zumindest eine der Lagen (1, 3) des Basissubstrates (4) auf einer Rolle bereitgestellt wird; zumindest eine der Lagen (16, 18) des Decksubstrates (15) auf einer Rolle bereitgestellt wird; zur Ausbildung einer Struktur-Funktionsschicht (9) auf das Basissubstrat (4) eine Materialschicht aufgebracht wird und die aufgebrachte Materialschicht einer Strukturierung unterzogen wird; **dadurch gekennzeichnet, dass** die Materialschicht mittels eines ersten Werkzeuges (58) unter Ausbildung einer Makrostruktur (10, 11) strukturiert wird und dass mittels der Strukturierung Mikro- und/oder Nanostrukturen (12) an den Makrostrukturen (10, 11) ausgebildet werden.

2. Verfahren nach Anspruch 1, **dadurch gekennzeichnet, dass** mittels der Strukturierung Mikro- und/oder Nanostrukturen (12) auf den Makrostrukturen (10, 11) ausgebildet werden.

3. Verfahren nach Anspruch 1 oder Anspruch 2, **dadurch gekennzeichnet, dass** das Basissubstrat (4) eine Basislage (1) aufweist, die auf einer ersten Flächenseite eine oder mehrere Basis-Funktionsschichten (2) trägt und/oder auf einer zweiten Flächenseite eine Basis-Trägerlage (3) trägt.

4. Verfahren nach Anspruch 1 oder Anspruch 2, **dadurch gekennzeichnet, dass** das Basissubstrat (4) eine Basis-Trägerlage (3) aufweist, die auf einer ersten Flächenseite eine oder mehrere Basis-Funktionsschichten (2) trägt.

5. Verfahren nach Anspruch 3 oder Anspruch 4, **dadurch gekennzeichnet, dass** die Materialschicht auf die Flächenseite des Basissubstrates (4) aufgebracht wird, die der Basis-Trägerlage (3) abgewandt ist.

6. Verfahren nach einem der vorstehenden Ansprüche, **dadurch gekennzeichnet, dass** mittels der Strukturierung Makrostrukturen (10, 11) an beiden Flächenseiten (9a, 9b) der Struktur-Funktionsschicht (9) ausgebildet werden.

7. Verfahren nach einem der vorstehenden Ansprüche, **dadurch gekennzeichnet, dass** zur Ausbildung der Mikro- und/oder Nanostrukturen (12) ein Materialfilm auf eine oder mehrere der Makrostrukturen (10, 11) aufgetragen wird, der mittels eines zweiten Werkzeuges unter Ausbildung der Mikro- und/oder Nanostrukturen (12) strukturiert wird.

8. Verfahren nach einem der vorstehenden Ansprüche, **dadurch gekennzeichnet, dass** auf die Struktur-Funktionsschicht (9) das Decksubstrat (15) aufgebracht wird.

9. Verfahren nach Anspruch 8, **dadurch gekennzeichnet, dass** im Anschluss an die Ausbildung der Struktur-Funktionsschicht (9) das Basissubstrat (4) von der Struktur-Funktionsschicht (9) entfernt wird, wodurch eine Flächenseite (9b) der Struktur-Funktionsschicht (9) freigelegt wird.

10. Verfahren nach Anspruch 9, **dadurch gekennzeichnet, dass** auf die freigelegte Flächenseite der Struktur-Funktionsschicht (9) zur Ausbildung einer weiteren Struktur-Funktionsschicht (9') eine weitere Materialschicht aufgebracht wird und die weitere Materialschicht einer Strukturierung unterzogen wird.

11. Verfahren nach Anspruch 10, **dadurch gekennzeichnet, dass** die weitere Materialschicht mittels eines zweiten Werkzeuges (77) unter Ausbildung zumindest eines positiven Strukturelementes (10') und/oder zumindest eines negativen Strukturelementes (11') strukturiert wird.

12. Verfahren nach Anspruch 10 oder Anspruch 11, **dadurch gekennzeichnet, dass** auf eine Flächenseite der weiteren Struktur-Funktionsschicht (9') ein Basissubstrat (4") aufgebracht wird.

13. Vorrichtung (51) zur Herstellung eines mehrlagigen Substratverbundes (8), der zumindest ein Basissubstrat (4), das zumindest eine Lage (1, 3) aufweist, ein Decksubstrat (15), das zumindest eine Lage (16, 18) aufweist, eine Struktur-Funktionsschicht (9, 9'), die zwischen dem Basissubstrat (4) und dem Decksubstrat (15) liegt, und eine Elektronikstruktur (27) aufweist, wobei die Vorrichtung (51) aufweist:
- zumindest eine Rolle (52, 53) zur Bereitstellung einer Lage (1, 3) des Basissubstrates (4);
- zumindest eine Rolle (62, 63) zur Bereitstellung einer der Lagen des Decksubstrates (15); und
- eine Einrichtung zur Ausbildung einer Struktur-Funktionsschicht (9, 9') auf dem Basissubstrat (4), wobei die Einrichtung zumindest eine Auftragungseinrichtung (57, 76) zum Auftragen einer Materialschicht auf das Basissubstrat (4) oder auf eine Struktur-Funktionsschicht (9) und zumindest ein Werkzeug (58, 77) zum Strukturieren der aufgebrachten Materialschicht aufweist, wobei das Werkzeug ein Werkzeug zur Ausbildung von Makrostrukturen und im Anschluss daran von Mikro- und/oder Nanostrukturen an den Makrostrukturen ist oder das Werkzeug ein Werkzeug zur Ausbildung von Makrostrukturen ist und die Vorrichtung (51) ein weiteres Werkzeug zur Ausbildung von Mikro- und/oder Nanostrukturen an den Makrostrukturen aufweist.

14. Vorrichtung nach Anspruch 13, **dadurch gekennzeichnet, dass** das Werkzeug (58, 77) eine Werkzeugwalze zum Aufprägen einer Struktur der Materialschicht ist.

15. Vorrichtung nach Anspruch 13 oder Anspruch 14, **dadurch gekennzeichnet, dass** sie eine Strahlungsquelle (59, 60, 78, 79) zum Fixieren und/oder Aushärten der Materialschicht mittels einer optischen Strahlung aufweist, wobei die Strahlungsquelle innerhalb (59, 78) oder außerhalb (60, 79) der Werkzeugwalze angeordnet ist.

## Claims

1. A method for the preparation of a multi-ply substrate composite (8) which has at least one base substrate (4) having at least one ply (1, 3), one top substrate (15) having at least one ply (16, 18), one structure functional layer (9) lying in between the base substrate (4) and the top substrate (15) and one electronic structure (27), wherein for the preparation of the multi-ply substrate composite (8) at least one of the plies (1, 3) of the base substrate (4) is provided on a roller; at least one of the plies (16, 18) of the top substrate (15) is provided on a roller; a material layer is applied to the base substrate (4) to form a structure functional layer (9) and the applied material layer is subjected to a structuring; **characterized in that** the material layer is structured by means of a first tool (58) to form a macrostructure (10, 11) and that micro and/or nanostructures (12) are formed on the macrostructures (10, 11) by means of structuring.

2. The method according to claim 1, **characterized in that** micro and/or nanostructures (12) are formed on the macrostructures (10, 11) by means of the structuring.

3. The method according to claim 1 or claim 2, **characterized in that** the base substrate (4) has a base ply (1) which bears one or more base functional layers (2) on a first surface side and/or bears a base carrier ply (3) on a second surface side.

4. The method according to claim 1 or claim 2, **characterized in that** the base substrate (4) has a base carrier ply (3) which bears one or more base functional layers (2) on a first surface side.

5. The method according to claim 3 or claim 4, **characterized in that** the material layer is applied onto the surface side of the base substrate (4) facing away from the base carrier ply (3).

6. The method according to any of the preceding claims, **characterized in that** macrostructures (10, 11) are formed on both surface sides (9a, 9b) of the structure functional layer (9) by means of the structuring.

7. The method according to any of the preceding claims, **characterized in that** to form the micro and/or nanostructures (12) a material film is applied onto one or more of the macrostructures (10, 11) which is structured by means of a second tool to form the micro and/or nanostructures (12).

8. The method according to any of the preceding claims, **characterized in that** the top substrate (15) is applied onto the structure functional layer (9).

9. The method according to claim 8, **characterized in that** subsequent to the formation of the structure functional layer (9) the base substrate (4) is removed from the structure functional layer (9) thereby exposing a surface side (9b) of the structure functional layer (9).

10. The method according to claim 9, **characterized in that** a further material layer is applied to the exposed surface side of the structure functional layer (9) to form a further structure functional layer (9') and the further material layer is subjected to a structuring.

11. The method according to claim 10, **characterized in that** the further material layer is structured by means of a second tool (77) to form at least one positive structural element (10') and/or at least one negative structural element (11').

12. The method according to claim 10 or claim 11, **characterized in that** a base substrate (4") is applied to a surface side of the further structure functional layer (9').

13. A device (51) for the preparation of a multi-ply substrate composite (8) which has at least one base substrate (4) having at least one ply (1, 3), one top substrate (15) having at least one ply (16, 18), one structure functional layer (9, 9') lying in between the base substrate (4) and the top substrate (15), and one electronic structure (27), wherein the device (51) has:
- at least one roller (52, 53) for providing a ply (1, 3) of the base substrate (4);
- at least one roller (62, 63) for providing one of the plies of the top substrate (15); and
- a means for forming a structure functional layer (9, 9') on the base substrate (4), wherein the means has at least one application means (57, 76) for applying a material layer to the base substrate (4) or to a structure function layer (9) and at least one tool (58, 77) for structuring the applied material layer, wherein the tool is a toll for forming macrostructures and thereafter micro and/or nanostructures on the macrostructures or the tool is a tool for forming macrostructures and the device (51) has a further tool for forming micro and/or nanostructures on the macrostructures.

14. The device according to claim 13, **characterized in that** the tool (58, 77) is a tool roll for embossing a structure of the material layer.

15. The device according to claim 13 or claim 14, **characterized in that** it has a radiation source (59, 60, 78, 79) for fixing and/or curing the material layer by means of an optical radiation, wherein the radiation source is arranged inside (59, 78) or outside (60, 79) of the tool roll.

## Revendications

1. Procédé pour la fabrication d'un substrat composite multicouche (8), qui présente au moins un substrat de base (4), qui présente au moins une couche (1, 3), un substrat de recouvrement (15), qui présente au moins une couche (16, 18), une couche fonctionnelle structurelle (9), qui se trouve entre le substrat de base (4) et le substrat de recouvrement (15), et une structure électronique (27), au moins l'une des couches (1, 3) du substrat de base (4) étant fournie sur un rouleau pour la fabrication du substrat composite multicouche (8) ; au moins une des couches (16, 18) du substrat de recouvrement (15) est fournie sur un rouleau ; une couche de matériau est appliquée sur le substrat de base (4) pour former une couche fonctionnelle structurelle (9) et la couche de matériau appliquée est soumise à une structuration ; **caractérisé en ce que** la couche de matériau est structurée au moyen d'un premier outil (58) en formant une macrostructure (10, 11) et que des microstructures et/ou des nanostructures (12) sont formées sur les macrostructures (10, 11) au moyen de la structuration.

2. Procédé selon la revendication 1, **caractérisé en ce que** des microstructures et/ou des nanostructures (12) sont constituées sur les macrostructures (10, 11) au moyen de la structuration.

3. Procédé selon la revendication 1 ou la revendication 2, **caractérisé en ce que** le substrat de base (4) possède une couche de base (1), qui porte une ou plusieurs couches fonctionnelles de base (2) sur un premier côté de surface et/ou une couche support de base (3) sur un deuxième côté de surface.

4. Procédé selon la revendication 1 ou la revendication 2, **caractérisé en ce que** le substrat de base (4) possède une couche support de base (3), qui porte une ou plusieurs couches fonctionnelles de base (2) sur un premier côté de surface.

5. Procédé selon la revendication 3 ou la revendication 4, **caractérisé en ce que** la couche de matériau est appliquée sur le côté de surface du substrat de base (4), qui est opposé à la couche support de base (3).

6. Procédé selon l'une des revendications précédentes, **caractérisé en ce que** des macrostructures (10, 11) sont formées, au moyen de la structuration, sur les deux côtés de surface (9a, 9b) de la couche fonctionnelle structurelle (9).

7. Procédé selon l'une des revendications précédentes, **caractérisé en ce qu'**aux fins de formation des microstructures et/ou des nanostructures (12) un film de matériau est appliqué sur l'une ou plusieurs des macrostructures (10, 11), qui est structuré au moyen d'un deuxième outil en formant les microstructures et/ou les nanostructures (12).

8. Procédé selon l'une des revendications précédentes, **caractérisé en ce que** le substrat de recouvrement (15) est appliqué sur la couche fonctionnelle structurelle (9).

9. Procédé selon la revendication 8, **caractérisé en ce qu'**à la suite de la formation de la couche fonctionnelle structurelle (9), le substrat de base (4) est retiré de la couche fonctionnelle structurelle (9), un côté de surface (9b) de la couche fonctionnelle structurelle (9) se trouvant ainsi exposé.

10. Procédé selon la revendication 9, **caractérisé en ce qu'**une autre couche supplémentaire de matériau est appliquée sur le côté de surface exposé de la couche fonctionnelle structurelle (9) afin de former une autre couche fonctionnelle structurelle (9') et **en ce que** l'autre couche de matériau est soumise à une structuration.

11. Procédé selon la revendication 10, **caractérisé en ce que** l'autre couche supplémentaire de matériau est structurée au moyen d'un deuxième outil (77) en formant au moins un élément structurel positif (10') et/ou au moins un élément structurel négatif (11').

12. Procédé selon la revendication 10 ou la revendication 11, **caractérisé en ce qu'**un substrat de base (4") est appliqué sur un côté de surface de l'autre couche fonctionnelle structurelle (9').

13. Dispositif (51) pour la fabrication d'un substrat composite multicouche (8) qui présente au moins un substrat de base (4), qui présente au moins une couche (1, 3), un substrat de recouvrement (15) qui comprend au moins une couche (16, 18), une couche fonctionnelle structurelle (9, 9') située entre le substrat de base (4) et le substrat de recouvrement (15), et une structure électronique (27), le dispositif (51) comprenant :
- au moins un rouleau (52, 53) pour fournir une couche (1, 3) du substrat de base (4) ;
- au moins un rouleau (62, 63) pour fournir l'une des couches du substrat de recouvrement (15) ; et
- un équipement pour la formation d'une couche fonctionnelle structurelle (9, 9') sur le substrat de base (4), l'équipement présentant au moins un équipement d'application (57, 76) pour l'application d'une couche de matériau sur le substrat de base (4) ou sur une couche fonctionnelle structurelle (9) et au moins un outil (58, 77) pour structurer la couche de matériau appliquée, l'outil étant un outil pour la formation de macrostructures et, ensuite, de microstructures et/ou de nanostructures sur les macrostructures ou l'outil étant un outil pour la formation de macrostructures et le dispositif (51) étant un outil supplémentaire pour la formation de microstructures et/ou de nanostructures sur les macrostructures.

14. Dispositif selon la revendication 13, **caractérisé en ce que** l'outil (58, 77) est un rouleau-outil pour l'impression d'une structure de la couche de matériau.

15. Dispositif selon la revendication 13 ou la revendication 14, **caractérisé en ce qu'**il présente une source de rayonnement (59, 60, 78, 79) pour fixer et/ou durcir la couche de matériau au moyen d'un rayonnement optique, la source de rayonnement étant disposée à l'intérieur (59, 78) ou à l'extérieur (60, 79) du rouleau-outil.
